# EUROPEAN PATENT APPLICATION

(11) **EP 4 730 723 A1**
(43) Date of publication of application: **22.04.2026**
(21) Application number: 25209530.2
(22) Date of filing: 17.10.2025
(51) Int. Cl.: H04L 25/08, H04L 25/14

(54) **FAULT TOLERANT PHYSICAL LAYER DEVICE WITH DYNAMIC LANE MAPPING FOR ELECTRO-OPTICAL COMMUNICATION SYSTEMS**

(30) Priority: 18.10.2024 US 202463709362 P; 26.11.2024 US 202463725493 P; 27.11.2024 US 202463725605 P; 27.02.2025 US 202563764159 P
(71) Applicant: Marvell Asia Pte Ltd, Singapore 369522 (SG)
(72) Inventor: Cao, Trang Minh Tu, Vancouver, BC, V5P3H3 (CA); Lee, Whay Sing, Milpitas, CA, 95035 (US); Farhoodfar, Arash, Milpitas, CA, 95035 (US); Swaminathan, Srinivas, San Jose, CA, 95132 (US); Duckering, Michael, Kanata, ON, K2W1B5 (CA); Berglas, Morrie, Ottowa, ON, K2A1C3 (CA); Quirk, Jay, Kanata, ON, K2L1Z4 (CA)
(74) Representative: Grünecker Patent- und Rechtsanwälte PartG mbB

(57) **Abstract**

A PHY device for transmitting data over a communication channel comprises a distribution circuit and a failure management circuit. The distribution circuit is configured to receive data from a host via a first plurality of lanes at a first data rate, and distribute the data into a second plurality of lanes for transmission over the communication channel. The failure management circuit is configured to monitor the communication channel, and detect failure of one of the second plurality of lanes. Subsequent to the detected failure, the distribution circuit is configured to receive the data from the host through the first plurality of lanes at a second data rate that is less than the first data rate, and to distribute the data received from the host through the first plurality of lanes at the second data rate into remaining lanes of the second plurality of lanes at the first data rate.

## Description

### CROSS-REFERENCE TO RELATED APPLICATIONS

This application claims the benefit of U.S. Provisional Application No. 63/709,362, filed on October 18, 2024, U.S. Provisional Application No. 63/725,493, filed on November 26, 2024, U.S. Provisional Application No. 63/725,605, filed on November 27, 2024, and U.S. Provisional Application No. 63/764,159, filed on February 27, 2025. The entire disclosures of the applications referenced above are incorporated herein by reference.

This application is related to U.S. Application No. ___, filed on ___ (MP14399). The entire disclosure of the application referenced above is incorporated herein by reference.

### FIELD

The present disclosure relates generally to optical communication systems and more particularly to a fault-tolerant physical layer (PHY) device with dynamic lane mapping for electro-optical communication systems.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Optical-electrical communication systems are widely used to transmit and receive data between computing nodes (also called hosts). For example, optical-electrical communication systems are used to transmit and receive data between data centers. Optical-electrical communication systems are also used to transmit and receive data between multiple computer systems within data centers. Further, optical-electrical communication systems are also used to transmit and receive data between data centers and entities in the outside world. For example, the entities in the outside world can include computer networks, servers, switches, routers, computers, etc. In optical-electrical communication systems, optical data is transmitted and received over communication channels comprising optical fibers, copper cables, connectors, etc.

### SUMMARY

A physical layer (PHY) device for transmitting data over a communication channel comprises a distribution circuit and a failure management circuit. The distribution circuit is configured to receive data from a host via a first plurality of lanes at a first data rate, and to distribute the data into a second plurality of lanes for transmission over the communication channel. The failure management circuit is configured to monitor the communication channel, and to detect failure of one of the second plurality of lanes. Subsequent to the detected failure, the distribution circuit is configured to receive the data from the host through the first plurality of lanes at a second data rate that is less than the first data rate, and to distribute the data received from the host through the first plurality of lanes at the second data rate into remaining lanes of the second plurality of lanes at the first data rate. The PHY device is configured to transmit the data in the remaining lanes at the first data rate over the communication channel.

In other features, the distribution circuit comprises a plurality of multiplexers configured to multiplex, subsequent to the detected failure, the data received through the first plurality of lanes at the second data rate into the remaining lanes at the first data rate to map the data in the first plurality of lanes at the second data rate to the data in the remaining lanes at the first data rate.

In other features, the distribution circuit comprises a plurality of multiplexers and a plurality of encoder and padding circuits. One of the multiplexers is configured to, subsequent to the detected failure, multiplex (i) data from a respective one of the first plurality of lanes corresponding to the remaining lanes and (ii) a portion of data from one of the first plurality of lanes corresponding to the detected failed lane in the second plurality of lanes. One of the encoder and padding circuits is configured to encode an output of a corresponding multiplexer to generate encoded data, to arrange an encoded portion corresponding to the portion of data from one of the first plurality of lanes at a predetermined location in the encoded data, and to append the encoded data with padding. The padding indicates the detected failure to a second PHY device receiving the transmitted data in the remaining lanes over the communication channel. The encoded portion arranged at the predetermined location allows the second PHY device to align the data from the remaining lanes.

In other features, the distribution circuit is configured to further increase a data rate of the remaining lanes to greater than the first data rate before transmitting the data in the remaining lanes over the communication channel.

In still other features, a physical layer (PHY) device for receiving data over a communication channel comprises an alignment circuit and a decoder. The alignment circuit is configured to receive data transmitted through a plurality of lanes over the communication channel; to determine that the plurality of lanes include data from a failed lane by detecting padding in each of the plurality of lanes; to detect, in each of the plurality of lanes, locations of the data added from the failed lane; to separate, based on the detected locations, the data added from the failed lane from remaining data corresponding to the plurality of lanes; to reconstruct the failed lane from the separated data; and to output the plurality of lanes and the reconstructed lane with respective data. The decoder is configured to decode the respective data in the plurality of lanes and the reconstructed lane.

In other features, the alignment circuit comprises a plurality of alignment and split circuits, a deskew circuit, and a reassembly circuit. The plurality of alignment and split circuits is configured to receive the plurality of lanes, to align the plurality of lanes using the locations of the data added from the failed lane in the plurality of lanes, and to split the aligned data from the plurality of lanes into (i) a first portion including the data from the failed lane and (ii) a second portion including remaining data. The deskew circuit is configured to remove skew between the data in the first portion. The reassembly circuit is configured to reassemble the deskewed data from the first portion to reconstruct the failed lane, and to reassemble the remaining data from the second portion into respective ones of the plurality of lanes.

In still other features, a method of recovering a lane that fails during transmission of data via multiple lanes over a communication channel comprises receiving data from a host via a first plurality of lanes at a first data rate, and distributing the data into a second plurality of lanes for transmission over the communication channel. The method comprises monitoring the communication channel, and detecting failure of one of the second plurality of lanes. The method comprises configuring the host, subsequent to the detected failure, to send the data through the first plurality of lanes at a second data rate that is less than the first data rate. The method comprises distributing the data received from the host through the first plurality of lanes at the second data rate into remaining lanes of the second plurality of lanes at the first data rate. The method comprises transmitting the data in the remaining lanes at the first data rate over the communication channel.

In other features, the distributing the data comprises multiplexing, subsequent to the detected failure, the data received through the first plurality of lanes at the second data rate into the remaining lanes at the first data rate to map the data in the first plurality of lanes at the second data rate to the data in the remaining lanes at the first data rate.

In other features, the distributing the data comprises multiplexing, subsequent to the detected failure, (i) data from a respective one of the first plurality of lanes corresponding to the remaining lanes and (ii) a portion of data from one of the first plurality of lanes corresponding to the detected failed lane in the second plurality of lanes, encoding the multiplexed data, arranging an encoded portion corresponding to the portion of data from one of the first plurality of lanes at a predetermined location in the encoded multiplexed data, and appending the encoded multiplexed data with padding. The padding indicates the detected failure to a receiving device receiving the transmitted data in the remaining lanes over the communication channel. The encoded portion arranged at the predetermined location allows the receiving device to align the data from the remaining lanes.

In other features, the method further comprises increasing a data rate of the remaining lanes to greater than the first data rate before transmitting the data in the remaining lanes over the communication channel.

In other features, the method further comprises receiving the data transmitted through the remaining lanes over the communication channel, detecting padding in each of the remaining lanes, and determining based on the detected padding that the remaining lanes include data from a failed lane. The method further comprises detecting, in each of the remaining lanes, locations of the data added from the failed lane; separating, based on the detected locations, the data added from the failed lane from remaining data corresponding to the remaining lanes; and reconstructing the failed lane from the separated data. The method further comprises outputting the remaining lanes and the reconstructed lane with respective data, and decoding the respective data in the remaining lanes and the reconstructed lane.

In other features, the method further comprises aligning the remaining lanes using the locations of the data added from the failed lane in the remaining lanes, and splitting the aligned data from the remaining lanes into (i) a first portion including the data from the failed lane and (ii) a second portion including remaining data. The method further comprises removing skew between the data in the first portion, reassembling the deskewed data from the first portion to reconstruct the failed lane, and reassembling the remaining data from the second portion into respective ones of the remaining lanes.

In still other features, a physical layer (PHY) device for transmitting data over a communication channel comprises a distribution circuit, a failure management circuit, and a rate adapter circuit. The distribution circuit is configured to receive data from a host via a first plurality of lanes at a first data rate, and to distribute the data into a second plurality of lanes for transmission over the communication channel. The failure management circuit is configured to monitor the communication channel, and to detect failure of one of the second plurality of lanes. The rate adapter circuit is configured to, subsequent to the detected failure, adapt the first data rate of the data received from the host to a second data rate that is less than the first data rate. The distribution circuit is configured to distribute, subsequent to the detected failure, the data received from the rate adapter circuit into remaining lanes of the second plurality of lanes at the second data rate. The PHY device is configured to transmit the data in the remaining lanes at the second data rate over the communication channel.

In other features, the distribution circuit comprises a plurality of multiplexers configured to multiplex, subsequent to the detected failure, the data received from the rate adapter circuit into the remaining lanes to map the data received in the first plurality of lanes at the first data rate to the data in the remaining lanes at the second data rate.

In other features, the distribution circuit comprises a plurality of multiplexers and a plurality of encoder and padding circuits. Each multiplexer is configured to, subsequent to the detected failure, multiplex (i) data output by the rate adapter circuit from one of the first plurality of lanes corresponding to the remaining lanes and (ii) a portion of data output by the rate adapter circuit from one of the first plurality of lanes corresponding to a failed one of the second plurality of lanes. Each encoder and padding circuit is configured to encode an output of a corresponding multiplexer to generate encoded data, to arrange an encoded portion corresponding to the portion of data corresponding to the failed lane at a predetermined location in the encoded data, and to append the encoded data with padding. The padding indicates the detected failure to a second PHY device receiving the transmitted data in the remaining lanes over the communication channel. The encoded portion arranged at the predetermined location allows the second PHY device to align the data from the remaining lanes.

In other features, the distribution circuit comprises a round-robin distributor and a plurality of encoders. The round-robin distributor is configured to distribute the data received from the rate adapter circuit in a round-robin manner. The plurality of encoders is configured to encode the data distributed by the round-robin distributor and to output the encoded data via the remaining lanes.

In other features, the PHY device further comprises a parity adder circuit configured to generate parity information based on the data received from the rate adapter circuit, and to add a parity lane including the parity information.

In other features, the parity lane is one of the second plurality of lanes. The distribution circuit is configured to increase a data rate of the remaining lanes to greater than the second data rate to include the parity lane in the second plurality of lanes.

In other features, the parity lane is in addition to the second plurality of lanes. The distribution circuit is configured to decrease a data rate of the remaining lanes to less than the second data rate to add the parity lane to the second plurality of lanes.

In still other features, a method of transmitting data via multiple lanes over a communication channel when a lane fails during transmission over the communication channel comprises receiving data from a host via a first plurality of lanes at a first data rate, and distributing the data into a second plurality of lanes for transmission over the communication channel. The method comprises monitoring the communication channel, and detecting failure of one of the second plurality of lanes. The method comprises adapting, subsequent to the detected failure, the first data rate of the data received from the host to a second data rate that is less than the first data rate; and distributing, subsequent to the detected failure, the data into remaining lanes of the second plurality of lanes at the second data rate. The method comprises transmitting the data in the remaining lanes at the second data rate over the communication channel.

In other features, the distributing the data into the remaining lanes comprises multiplexing, subsequent to the detected failure, the data at the second data rate into the remaining lanes to map the data received in the first plurality of lanes at the first data rate to the data in the remaining lanes at the second data rate.

In other features, the distributing the data into the remaining lanes comprises multiplexing, subsequent to the detected failure, (i) data output at the second data rate from one of the first plurality of lanes corresponding to the remaining lanes and (ii) a portion of data output at the second data rate from one of the first plurality of lanes corresponding to a failed one of the second plurality of lanes. The method further comprises encoding the multiplexed data to generate encoded data, arranging an encoded portion corresponding to the portion of data corresponding to the failed lane at a predetermined location in the encoded data, and appending the encoded data with padding. The padding indicates the detected failure to a receiving device receiving the transmitted data in the remaining lanes over the communication channel. The encoded portion arranged at the predetermined location allows the receiving device to align the data from the remaining lanes.

In other features, the distributing the data into the remaining lanes comprises distributing the data at the second data rate in a round-robin manner, and encoding the data distributed in the round-robin manner to output the encoded data via the remaining lanes.

In other features, the method further comprises generating parity information based on the data distributed at the second data rate, and adding a parity lane including the parity information.

In other features, the parity lane is one of the second plurality of lanes. The method further comprises increasing a data rate of the remaining lanes to greater than the second data rate to include the parity lane in the second plurality of lanes.

In other features, the parity lane is in addition to the second plurality of lanes. The method further comprises decreasing a data rate of the remaining lanes to less than the second data rate to add the parity lane to the second plurality of lanes.

In still other features, a physical layer (PHY) device for receiving data over a communication channel comprises an alignment circuit and a decoder. The alignment circuit is configured to receive data transmitted at a first data rate through a plurality of lanes over the communication channel; to determine that the plurality of lanes include data from a failed lane by detecting padding in each of the plurality of lanes; to detect, in each of the plurality of lanes, locations of the data added from the failed lane; to separate, based on the detected locations, the data added from the failed lane from remaining data corresponding to the plurality of lanes; to reconstruct the failed lane from the separated data; and to output the plurality of lanes and the reconstructed lane with respective data at a second data rate that is greater than the first data rate. The decoder is configured to decode the respective data in the plurality of lanes and the reconstructed lane.

In other features, the alignment circuit comprises a plurality of alignment and split circuits, a deskew circuit, and a reassembly circuit. The plurality of alignment and split circuits is configured to receive the plurality of lanes, to align the plurality of lanes using the locations of the data added from the failed lane in the plurality of lanes, and to split the aligned data from the plurality of lanes into (i) a first portion including the data from the failed lane and (ii) a second portion including remaining data. The deskew circuit is configured to remove skew between the data in the first portion. The reassembly circuit is configured to reassemble the deskewed data from the first portion to reconstruct the failed lane, and to reassemble the remaining data from the second portion into respective ones of the plurality of lanes.

In other features, the PHY device further comprises a repair circuit configured to, in response to one of the plurality of lanes being a parity lane comprising parity information, in response to receiving the plurality of lanes and a parity lane comprising parity information through the communication channel: detect whether one of the plurality of lanes has errors; and correct the errors in the one of the plurality of lanes based on the data in the plurality of lanes and the parity information in the parity lane.

In still other features, a method of recovering a lane that fails during transmission of data via multiple lanes over a communication channel comprises receiving data transmitted at a first data rate through a plurality of lanes over the communication channel; determining that the plurality of lanes include data from a failed lane by detecting padding in each of the plurality of lanes; detecting, in each of the plurality of lanes, locations of the data added from the failed lane; separating, based on the detected locations, the data added from the failed lane from remaining data corresponding to the plurality of lanes; and reconstructing the failed lane from the separated data. The method comprises outputting the plurality of lanes and the reconstructed lane with respective data at a second data rate that is greater than the first data rate, and decoding the respective data in the plurality of lanes and the reconstructed lane.

In other features, the method further comprises aligning the received plurality of lanes using the locations of the data added from the failed lane in the plurality of lanes, and splitting the aligned data from the plurality of lanes into (i) a first portion including the data from the failed lane and (ii) a second portion including remaining data. removing skew between the data in the first portion. The method further comprises reassembling the deskewed data from the first portion to reconstruct the failed lane, and reassembling the remaining data from the second portion into respective ones of the plurality of lanes.

In other features, the method further comprises, in response to one of the plurality of lanes being a parity lane comprising parity information, or in response to receiving the plurality of lanes and a parity lane comprising parity information through the communication channel: detecting whether one of the plurality of lanes has errors, and correcting the errors in the one of the plurality of lanes based on the data in the plurality of lanes and the parity information in the parity lane.

In still other features, a physical layer (PHY) device for receiving data over a communication channel comprises a plurality of decoders, an aligned circuit, and a re-assembler circuit. The plurality of decoders is configured to decode data received in a plurality of lanes through the communication channel and to output the decoded data over respective lanes. The aligned circuit is configured to align the decoded data received from the decoders across the respective lanes. The re-assembler circuit is configured to reassemble the aligned data received from the aligner circuit and to output the reassembled data via the respective lanes.

In other features, the plurality of decoders is configured to receive the data in the plurality of lanes at a first data rate. The re-assembler circuit is configured to output the reassembled data via the respective lanes at a second data rate that is greater than the first data rate.

In other features, in response to the plurality of lanes including a parity lane comprising parity information or in response to receiving the plurality of lanes and a parity lane comprising parity information through the communication channel: the plurality of decoders is configured to receive the data in the plurality of lanes at a first data rate; and the re-assembler circuit is configured to output the reassembled data via the respective lanes at a second data rate that is less than the first data rate.

In other features, the PHY device further comprises a repair circuit configured to, (i) in response to the plurality of lanes including data from a failed lane and the plurality of lanes including a parity lane including parity information or (ii) in response to the plurality of lanes including data from a failed lane and in response to receiving the plurality of lanes and a parity lane comprising parity information through the communication channel: regenerate the failed lane using the data in the plurality lanes and the parity information in the parity lane; and output the plurality of lanes including the regenerated lane to the plurality of decoders.

In other features, the PHY device further comprises a repair circuit configured to, in response to one of the plurality of lanes being a parity lane comprising parity information, or in response to receiving the plurality of lanes and a parity lane comprising parity information through the communication channel: detect whether one of the plurality of lanes has errors; correct the errors in the one of the plurality of lanes based on the data in the plurality of lanes and the parity information in the parity lane; and output the plurality of lanes to the plurality of decoders.

In still other features, a method of recovering a lane that fails during transmission of data via multiple lanes over a communication channel comprises decoding data received in a plurality of lanes through the communication channel and to output the decoded data over respective lanes, aligning the decoded data across the respective lanes, and reassembling the aligned data to output the reassembled data via the respective lanes.

In other features, the method further comprises receiving the data in the plurality of lanes at a first data rate, and outputting the reassembled data via the respective lanes at a second data rate that is greater than the first data rate.

In other features, the method further comprises, in response to the plurality of lanes including a parity lane comprising parity information or in response to receiving the plurality of lanes and a parity lane comprising parity information through the communication channel: receiving the data in the plurality of lanes at a first data rate; and outputting the reassembled data via the respective lanes at a second data rate that is less than the first data rate.

In other features, the method further comprises, (i) in response to the plurality of lanes including data from a failed lane and the plurality of lanes including a parity lane including parity information or (ii) in response to the plurality of lanes including data from a failed lane and in response to receiving the plurality of lanes and a parity lane comprising parity information through the communication channel: regenerating the failed lane using the data in the plurality lanes and the parity information in the parity lane; and outputting the plurality of lanes including the regenerated lane to for the decoding.

In other features, the method further comprises, in response to one of the plurality of lanes being a parity lane comprising parity information, or in response to receiving the plurality of lanes and a parity lane comprising parity information through the communication channel: detecting whether one of the plurality of lanes has errors; correcting the errors in the one of the plurality of lanes based on the data in the plurality of lanes and the parity information in the parity lane; and outputting the plurality of lanes to for the decoding.

Further areas of applicability of the present disclosure will become apparent from the detailed description, the claims and the drawings. The detailed description and specific examples are intended for purposes of illustration only and are not intended to limit the scope of the disclosure.

### BRIEF DESCRIPTION OF DRAWINGS

FIG. 1 shows a block diagram of an optical-electrical communication system.
FIG. 2 shows an example of an artificial intelligence (AI) application employing multiple computing nodes communicating with each other using the optical-electrical communication system of FIG. 1.
FIG. 3 shows an example of a typical multi-lane communication link between hosts in the optical-electrical communication system of FIG. 1.
FIGS. 4 and 5 show an example of an optical-electrical communication system utilizing fault-tolerant physical layer (PHY) devices with FIG. 4 showing normal operation (without lane failure) and FIG. 5 showing fault-tolerant operation (with lane failure) according to the present disclosure.
FIG. 6 shows the fault-tolerant PHY devices of the optical-electrical communication system of FIGS. 4 and 5 in further detail.
FIG. 7 shows a lane distribution circuit of the fault-tolerant PHY device of a transmitter of the optical-electrical communication system of FIGS. 4 and 5 in further detail.
FIG. 8 shows a lane alignment circuit of the fault-tolerant PHY device of a receiver of the optical-electrical communication system of FIGS. 4 and 5 in further detail.
FIGS. 9 and 10 show an example of lane mapping performed by the lane distribution circuit of FIG. 7 when all physical lanes are operating normally (i.e., with no lane failure).
FIGS. 11 and 12 show an example of lane mapping performed by the lane distribution circuit of FIG. 7 when one of the physical lanes fails.
FIG. 13 shows an example of lane alignment performed by the lane alignment circuit of FIG. 8 when one of the physical lanes fails.
FIG. 14 shows an example of the handshake performed by the hosts and the PHY devices of the optical-electrical communication system of FIGS. 4 and 5 to perform the operations shown in FIGS. 4-13.
FIG. 15 shows an embodiment of an optical-electrical communication system in which instead of hosts reducing data rate of lanes between hosts and PHY devices, the PHY devices perform rate adaptation in addition to dynamic lane mapping and lane alignment when a physical lane fails.
FIG. 16 shows a codeword distributor circuit of the fault-tolerant PHY device of a transmitter of the optical-electrical communication system of FIG. 15 in further detail.
FIG. 17 shows a codeword aligner circuit of the fault-tolerant PHY device of a receiver of the optical-electrical communication system of FIG. 15 in further detail.
FIG. 18 shows an example of an optical-electrical communication system comprising a fault-tolerant PHY device that uses a parity lane feature for erasure mode of operation in combination with the dynamic lane mapping and the rate adaptation feature shown in FIGS. 4-17.
FIG. 19 shows a method used by the fault-tolerant PHY devices of the optical-electrical communication systems of FIGS. 4-14.
FIG. 20 shows a method used by the fault-tolerant PHY devices of the optical-electrical communication systems of FIGS. 15-17.
FIG. 21 shows a method used by the fault-tolerant PHY device of the transmitter of the optical-electrical communication system of FIG. 18 to add parity information to a parity lane.
FIG. 22 shows a method used by the fault-tolerant PHY device of the receiver of the optical-electrical communication system of FIG. 18 to recover a failed lane and to correct data in any lane using the parity information in a parity lane.

In the drawings, reference numbers may be reused to identify similar and/or identical elements.

### DESCRIPTION

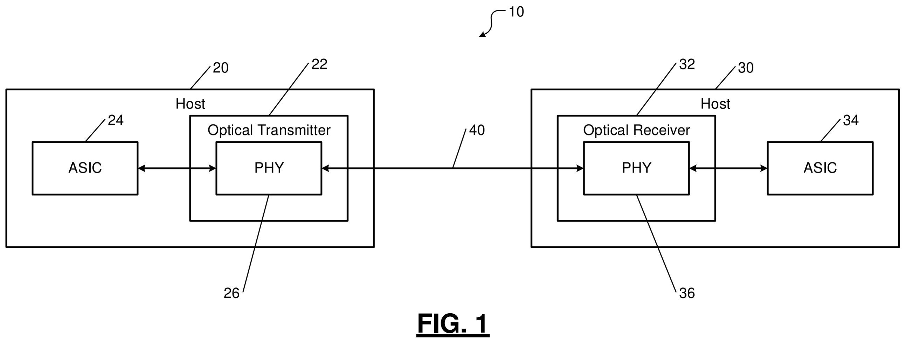

FIG. 1 shows an example of an optical-electrical communication system 10. The optical-electrical communication system 10 comprises a host 20 that communicates with a host 30 via an optical communication channel 40 comprising an optical fiber, copper cables, connectors, etc. The hosts 20, 30 are also called computing nodes 20, 30, which can include any computing device such as a server, a network switch, a network router, a computer, etc. Both the hosts 20, 30 can transmit data to each other and can receive data from each other via the optical communication channel (simply called the communication channel) 40. For convenience, in the following description, the host 20 is described as transmitting data to the host 30, and the host 30 is described as receiving data from the host 20. In practice, the host 30 can also transmit data to the host 20, and the host 20 can receive data from the host 30. All of the following description related to the host 20 transmitting data to the host 30 and the host 30 receiving data from the host 20 applies equally to the host 30 transmitting data to the host 20 and the host 20 receiving data from the host 30.

The host 20 comprises an optical transmitter 22 and a processor such as an Application-Specific Integrated Circuit (ASIC) 24. For example, the ASIC 24 can comprise a system-on-chip (SOC). The ASIC 24 processes data to be transmitted and forwards the data to the optical transmitter 22. The optical transmitter 22 transmits the data via the communication channel 40. The host 30 comprises an optical receiver 32 and a processor such as an ASIC 34. For example, the ASIC 34 can comprise an SOC. The optical receiver 32 receives data from the host 20 via the communication channel 40 and forwards the data to the ASIC 34 for further processing.

The optical transmitter 22 comprises a physical layer (PHY) device 26 that attaches to the communication channel 40. The optical receiver 32 comprises a PHY device 36 that attaches to the communication channel 40. The PHY devices 26, 36 are also called communication ports or simply ports 26, 36. The optical transmitter 22 and the optical receiver 32 communicate over the communication channel 40 by establishing a communication link between respective PHY devices (ports) 26, 36 via the communication channel 40.

The optical transmitter 22 receives the data to be transmitted from the ASIC 24, modulates an optical signal (e.g., laser, which is a carrier) with the data, and transmits the modulated optical signal via the PHY device 26 over the communication channel 40. The optical receiver 32 receives the modulated optical signal via the PHY device 36 connected to the communication channel 40, extracts the data from the modulated optical signal, and forwards the extracted data to the ASIC 34 for further processing.

Typically, the communication channel 40 between the two ports 26, 36 can comprise multiple physical lanes. Failure of a single physical lane can bring down the entire port and interrupt the communication link between the hosts 20, 30. As described below in detail, the present disclosure provides a fault tolerant PHY device for the hosts 20, 30 that provides an uninterrupted communication link between the hosts 20, 30 despite failure of one or more lanes in the communication link between the hosts 20, 30. The fault tolerant PHY/link between hosts is advantageous particularly in networking systems where interruptions in service operations due to link failure are undesirable.

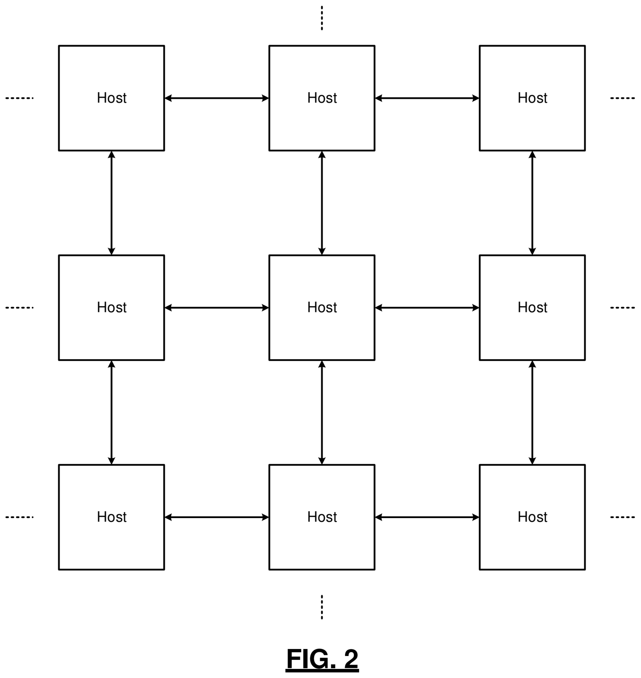

FIG. 2 shows an example of an artificial intelligence (AI) application employing multiple computing nodes (e.g., similar to hosts 20, 30). The computing nodes (i.e., hosts) are interconnected by communication channels similar to the communication channel 40 and communicate with each other via the communication channels. Having an uninterrupted link between the computing nodes despite lane failures in the communication channels is useful in such parallel computing systems, where compute/communication events are coordinated in a syncopated (synchronously operated) patterns for optimal performance. Failure of a single link in any communication channels between any of the computing nodes can not only disrupt a compute/communication event local to the system but can also negatively impact the coordinated patterns within the system. Such failures can degrade performance of such systems, which require reconfiguration/resynchronization of the system.

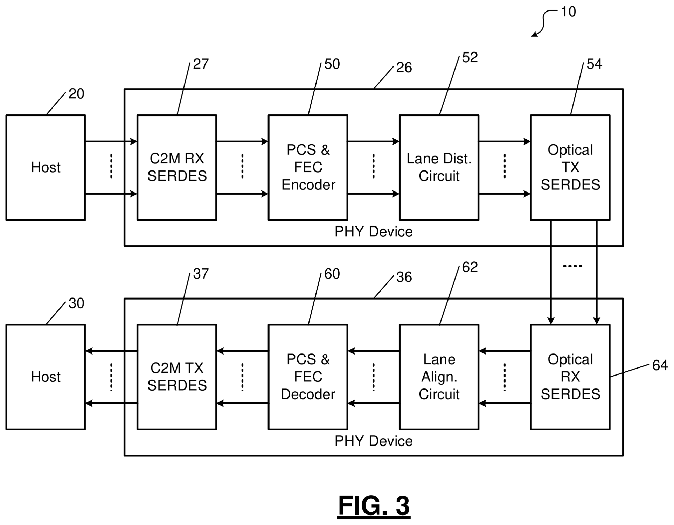

FIG. 3 shows an example of a typical multi-lane communication link between the two hosts 20, 30 of the optical-electrical communication system 10. For example, in a 1.6 terabit Ethernet communication system, the hosts 20, 30 communicate via 8x200Gbps physical lanes. The host 20 communicates via the PHY device 26. The host 30 communicates via the PHY device 36. The PHY devices 26, 36 communicate with each other via the communication channel 40. The PHY devices 26, 36 are optical/electrical modules that interface via an electrical interface with the hosts 20, 30 and that interface via an optical interface with the communication channel 40.

The PHY device 26 comprises a chip-to-module (C2M) receive (RX) serializer/deserializer (SERDES) 27, a Physical Coding Sublayer (PCS) and a Forward Error Correction (FEC) encoder 50, a lane distribution circuit 52, and an optical transmit (TX) SERDES 54. The RX SERDES 27 is connected to the host 20 via an electrical interface. The optical TX SERDES 54 is connected to the communication channel 40 via an optical interface. While not shown, the optical TX SERDES 54 comprises circuitry (e.g., optical modulator, optical amplifier, etc.) to convert electrical signals to optical signals.

The PHY device 36 comprises an optical receive (RX) SERDES 64, a lane alignment circuit 62, a PCS and FEC decoder 60, and a C2M TX SERDES 37. The optical RX SERDES 64 is connected to the communication channel 40 via an optical interface. While not shown, the optical RX SERDES 64 comprises circuitry (e.g., optical demodulator, optical amplifier, etc.) to convert optical signals to electrical signals. The C2M TX SERDES 37 is connected to the host 30 via an electrical interface. The PCS and FEC encoder 50 and the PCS and FEC decoder 60 are simply called PCS FEC encoder 50 and PCS FEC decoder 60, respectively. The C2M RX SERDES 27, C2M TX SERDES 37, optical TX SERDES 54, and optical RX SERDES 64 are simply called SERDES's 27, 37, 54, 64, respectively.

On the host 20 (transmitter) side, the SERDES 27 receives data to be transmitted from the host 20 via a parallel bus and converts the data into serial data streams. In the PCS FEC encoder 50, the PCS encodes the data in the serial data streams into blocks with added alignment markers. The FEC adds redundant bits (parity) to the encoded blocks to enable error detection and correction by the receiver (host 30). The coding scheme helps the receiver (host 30) with clock recovery and lane alignment. The PCS FEC encoder 50 operates in the physical layer and encodes data from higher layers (e.g., medium access or MAC layer) into a format suitable for transmission over the physical medium (the communication channel 40).

For example, the PCS adds 2 bits of control or synchronization information to 64 bits of data and creates a 66-bit block for transmission. The PCS performs data scrambling and lane alignment. The data is scrambled to ensure a balanced distribution of 1s and 0s to prevent long runs of the same bit that can make synchronization difficult. Additionally, the PCS periodically inserts alignment markers into the data stream. The alignment markers are used by the receiving PCS (in the host 30) to realign multiple data lanes and reassemble the data stream correctly.

Additionally, in the PCS FEC encoder 50, the FEC provides resilience against noise and signal impairments. The FEC adds redundancy to the data that allows the receiver (host 30) to detect and correct errors that occur during transmission. The FEC calculates and appends parity check bits to the data blocks provided by the PCS. The data and parity bits are organized into FEC codewords. The parity bits allow the receiver (host 30) to reconstruct the original data even if some bits are corrupted or lost due to noise or other physical layer impairments, which increases link tolerance to errors. On the host 30 (receiver) side, the PCS FEC decoder 60 decodes the data.

On the host 20 (transmitter) side, the lane distribution circuit 52 distributes the stream of data from the PCS FEC encoder 50 across multiple parallel data lanes. The distribution process effectively converts a single data stream into multiple data streams to be transmitted simultaneously over different physical lines concurrently (in parallel). Sending data concurrently over multiple parallel lanes allows for higher overall bandwidth and throughput compared to a single lane operating at the same speed. The primary function of the lane distribution circuit 52 is to distribute bytes from the incoming data stream onto a configured number of physical lanes. The lane distribution circuit 52 ensures efficient and high-bandwidth data transfer by splitting and managing the data flow across multiple physical lanes.

On the host 30 (receiver) side, the lane alignment circuit 62 synchronizes and aligns data streams received across different lanes. The data transmitted across multiple lanes can experience varying delays due to differences in transmission paths, channel (cable) lengths, and/or signal processing within the transmitter (host 20). The delays can cause lane skew when the data from different lanes arrives at the receiver at slightly different times, which causes a misalignment of the overall data stream. The lane alignment circuit 62 detects and corrects the lane skew by detecting alignment markers, buffering data, synchronization, and realignment. Specifically, the transmitted data stream includes alignment markers inserted at regular intervals as described above. A buffer for each lane temporarily stores the incoming data. The lane alignment circuit 62 detects the alignment markers in each lane and adjusts the timing of the data in the buffers to synchronize and align all the lanes. The lane alignment circuit 62 correctly reassembles the aggregate data stream by compensating for skew between the lanes and mitigates effects of variations in latency and timing differences between the lanes.

On the host 20 (transmitter) side, the SERDES 54 converts the electrical data in each of the data lanes received from the lane distribution circuit 52 into a high-speed serial optical data stream for transmission via the communication channel 40. On the host 30 (receiver) side, the SERDES 64 converts the high-speed serial optical stream back into electrical data. The SERDES 64 uses clock and data recovery (CDR) where a clock signal is extracted from the incoming data stream to properly align and reconstruct the original data. The SERDES's 54, 64 allow for higher data rates than parallel data transmissions and overcome the limitations of clock and data skew encountered in parallel data transmissions.

In the multi-lane optical-electrical communication systems described above, when a lane between two ports fails, the ports go down and the link between the ports becomes inactive interrupting the link. The present disclosure provides dynamic lane mapping to maintain the link between two ports when a lane between the ports fails. For example, a multi-lane optical-electrical communication systems can comprise a 1.6 Tbps link between two ports. For example, the 1.6 Tbps link (i.e., the communication channel 40) can be divided into 8 physical lanes with each lane communicating at a data rate of 212.5Gbps (nominal data rate). In an embodiment, when one of the 8 lanes fails, one side (TX or RX) that detects a lane failure reduces the data rate of the 8 lanes between the host and an optical module connecting the host to the communication channel 40 to 7/8^{th} of the nominal data rate (e.g., from 212.5Gbps to 212.5Gbps*7/8 = 185.9Gbps per lane). The side with one failed lane remaps the traffic from the 8 lanes from the host to 7 lanes between the optical module and the communication channel 40 with each of the 7 lanes lane operating at the nominal data rate. The other side performs the same operations.

Specifically, the hosts on both sides reduce the data rate of each of the 8 lanes between the hosts and respective optical modules to 7/8^{th} of the nominal data rate. The optical modules on both sides (TX and RX) apply dynamic lane mapping and multiplex data from 8 lanes from the respective host to 7 lanes between the optical modules and the communication channel 40 with each of the 7 lanes operating at the nominal data rate. The optical module on the transmit (TX) side applies dynamic lane mapping and multiplexes data from 8 lanes from the host, with each of the 8 lanes operating at the reduced data rate, to 7 lanes between the optical module and the communication channel 40, with each of the 7 lanes operating at the nominal data rate. The optical module on the receive (RX) side applies dynamic lane mapping and demultiplexes data from 7 lanes from the communication channel 40, with each of the 7 lanes operating at the nominal data rate, to 8 lanes between the optical module and the host, with each of the 8 lanes operating at the reduced data rate. In a variation of the above embodiment, a data rate adaptation mechanism can be employed in combination with dynamic lane mapping when a lane fails. These and additional features of the present disclosure are described below in detail.

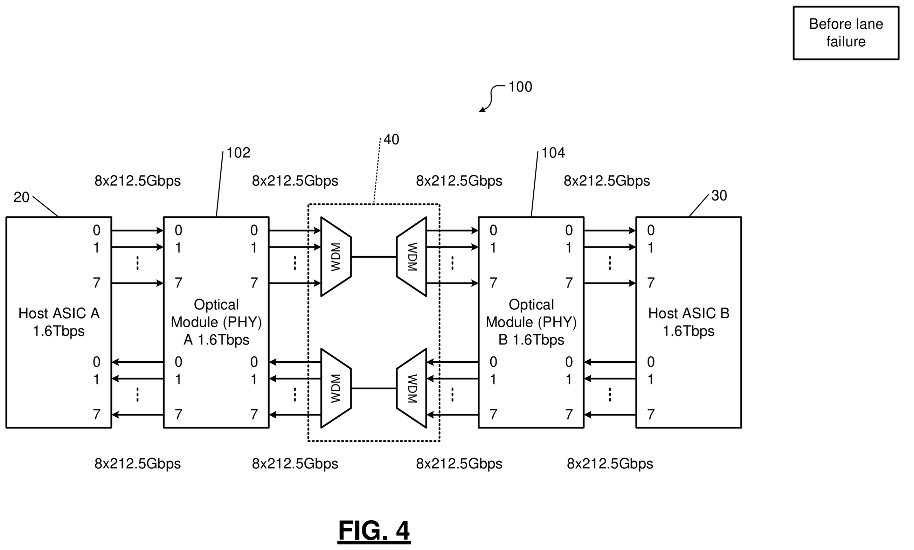

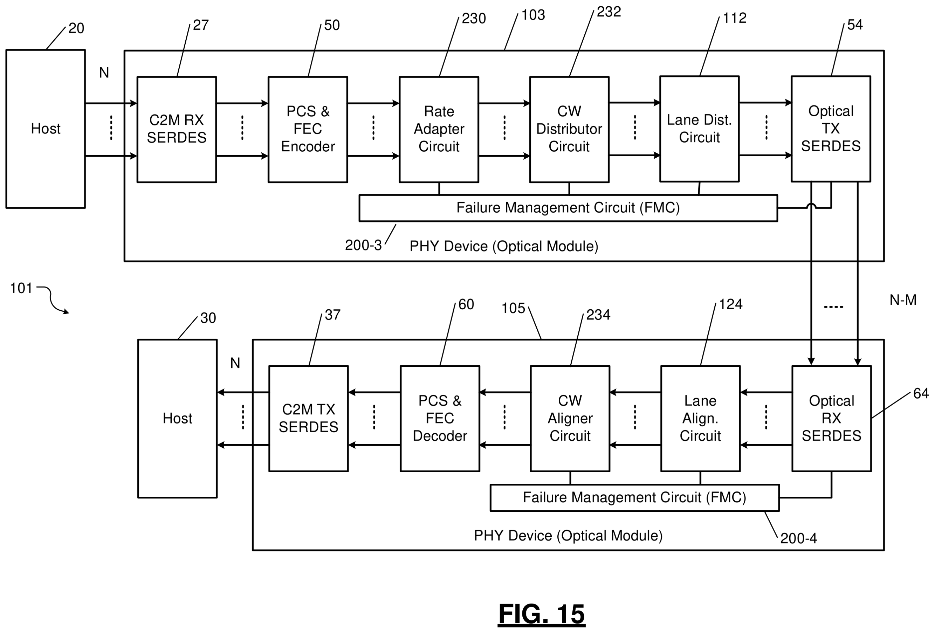

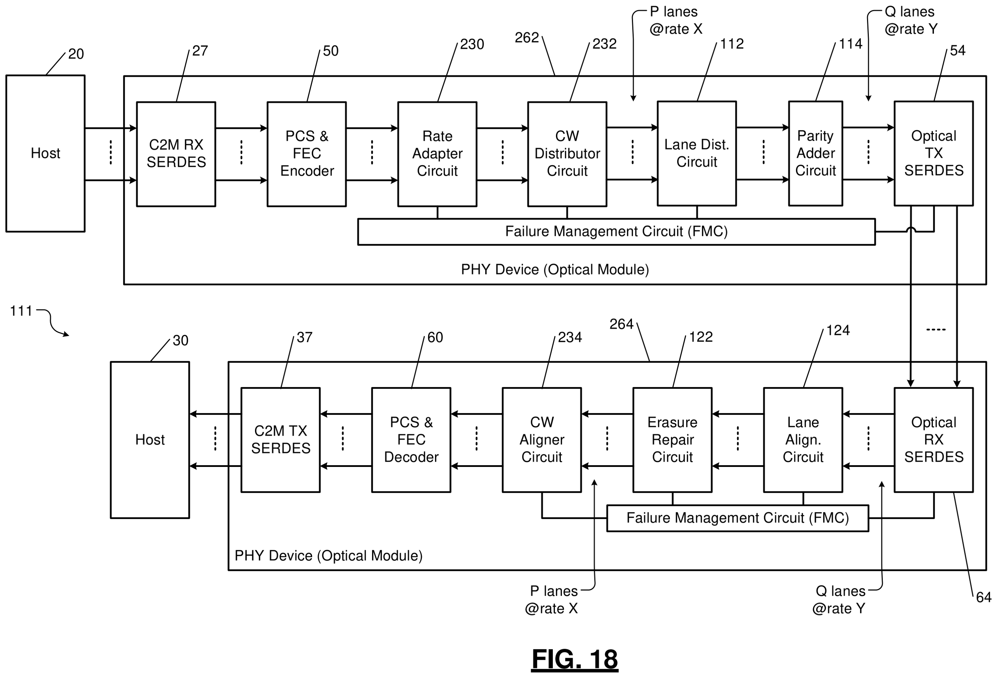

The following disclosure is organized as follows. The dynamic lane mapping, where the host devices reduce the data rate of the lanes 7/8^{th} of the nominal data rate, is shown and described with reference to FIGS. 4-14. An embodiment combining the dynamic lane mapping and a rate adaptation feature to avoid triggering the host devices to reduce the data rate of the lanes is shown and described with reference to FIGS. 15-17. An embodiment combining the dynamic lane mapping, the rate adaptation feature, and addition of a parity lane for erasure mode is shown and described with reference to FIG. 18.

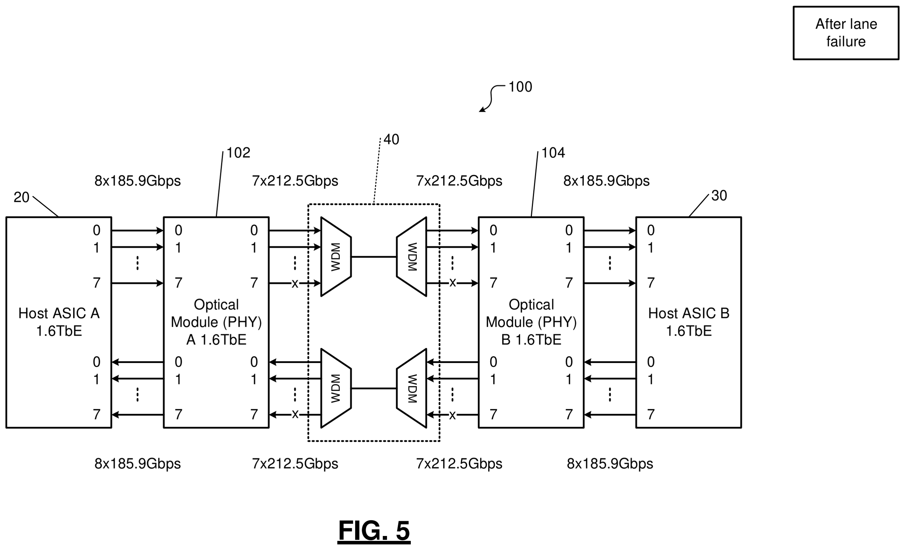

FIGS. 4 and 5 show an example of an optical-electrical communication system 100 utilizing a fault-tolerant PHY according to the present disclosure. FIG. 4 shows normal operation described below. FIG. 5 shows operation when a lane fails as described below. The system 100 comprises the hosts 20, 30 and respective optical modules 102, 104 communicating via the communication channel 40. For example, in a 1.6 terabit Ethernet communication system, the hosts 20, 30 communicate via 8x200Gbps physical lanes. The actual data rate of each of the 8 lanes is 212.5Gbps and is called a nominal data rate. Elements shown as WDM are wavelength division multiplexers.

The host 20 communicates via the optical module 102 connected to the communication channel 40. The host 30 communicates via the optical module 104 connected to the communication channel 40. The optical modules 102, 104 comprise respective PHY devices. The PHY devices comprise electrical interfaces used to connect the optical modules 102, 104 to the hosts 20, 30. The PHY devices comprise optical interfaces used to connect the optical modules 102, 104 to the communication channel 40. Accordingly, the optical modules 102, 104 are also called optical-electrical modules 102, 104. The optical-electrical modules 102, 104 also comprise other components of optical transmitters and optical receivers such as optical modulators and demodulators, optical amplifiers and filters, and so on (all not shown).

Throughout the following description, the optical-electrical modules 102, 104 are simply called PHY devices 102, 104 since the fault-tolerant features of the present disclosure described below are implemented in the PHY devices of the optical-electrical modules 102, 104. When a lane fails, the PHY devices 102, 104 employ fault-tolerant techniques such as dynamic lane mapping to maintain the link between the hosts 20, 30 as described below. Accordingly, the PHY devices 102, 104 are called fault-tolerant PHY devices 102, 104 that are implemented in the optical-electrical modules comprising an optical transmitter and an optical receiver. The same applies to PHY devices 103, 105 described below with reference to FIGS. 15-17 and to PHY devices 262, 264 described below with reference to FIG. 18.

In FIG. 4, in normal operation (when all lanes are operating normally and none of the lanes has failed), data is transmitted between the hosts 20, 30 through 8 lanes with each lane operating at 212.5Gps. The system 100 operates at a throughput of 1.6Tbps. A transmit portion of the PHY device 102 converts electrical signals received from the host 20 to optical signals for transmission over the communication channel 40. A receive portion of the PHY device 104 converts the optical signals received from the communication channel 40 to electrical signals that are processed by the host 30. Receive and transmit portions of the PHY devices 102, 104 operate similarly. The hosts 20, 30 and the PHY devices 102, 104 transmit and receive data using 8 lanes in each direction (transmit and receive). Each of the 8 lanes in each direction operates at 212.5Gbps.

In FIG. 5, when one of the optical lane fails (marked X), the hosts 20, 30 still communicate with the PHY devices 102, 104 using 8 lanes in each direction (transmit and receive) but reduce the data rate of the 8 lanes to 7/8^{th} of the nominal data rate of 212.5Gbps. Each of the 8 lanes between the hosts 20, 30 and the PHY devices 102, 104 operates in both directions (transmit and receive) at the reduced data rate of (7/8)*212.5Gbps = 185.9Gbps. The PHY devices 102, 104 apply dynamic lane mapping (described below in detail) to map the data from the 8 lanes from the host side (between the hosts 20, 30 and the PHY devices 102, 104) to 7 lanes on the optical side (between the PHY devices 102, 104 and the communication channel 40) and vice versa. Each of the 7 lanes (8 lanes minus 1 failed lane) on the optical side (between the PHY devices 102, 104 and the communication channel 40) operates at the nominal data rate of 212.5Gbps.

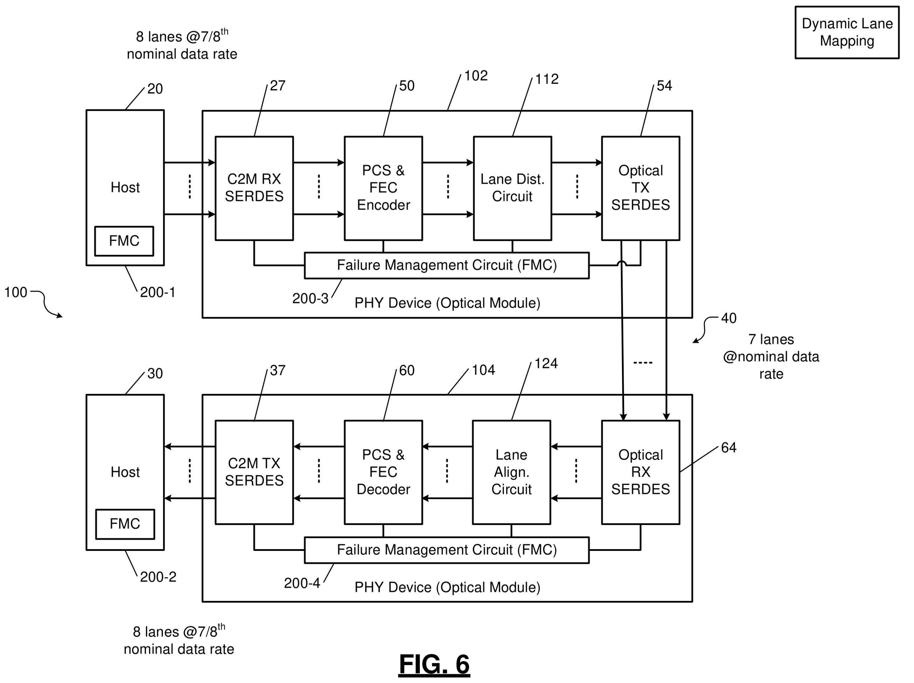

FIG. 6 shows the PHY devices 102, 104 in further detail. For simplicity of illustration, only the transmit portion of the PHY device 102 and the receive portion of the PHY device 104 are shown. The following description of the transmit portion of the PHY device 102 and the receive portion of the PHY device 104 is symmetric and applies equally in opposite direction - to transmit portion of the PHY device 104 and the receive portion of the PHY device 102.

The PHY device 102 comprises the SERDES 27, the PCS FEC encoder 50, a lane distribution circuit 112, and the SERDES 54. The PHY device 104 comprises the SERDES 64, a lane alignment circuit 124, the PCS FEC decoder 60, and the SERDES 37. Elements identified in FIG. 6 by the same reference numerals used in FIG. 3 are not described again for brevity. Each of the hosts 20, 30 and each of the PHY devices 102, 104 employ a failure management circuit described below in detail. The PHY devices 102, 104 are connected to and communicate with the hosts 20, 30 via elements 27, 37, respectively. The PHY devices 102, 104 are connected to the communication channel 40 via elements 54, 64, respectively. The PHY devices 102, 104 communicate with each other via the communication channel 40.

Suppose N (e.g., N=8) denotes the total number of lanes on which data is transmitted from the PHY device 102 to the PHY device 104 via the communication channel 40. Suppose M (e.g., M=1, 0 ≤ M ≤ N-1) denotes a failed lane between the PHY devices 102, 104. For example, the PHY device 104 can detect a failed lane based on a higher bit error rate (BER) in one of the lanes compared to the other lanes. The PHY device 104 can also detect a failed lane by detecting a loss of signal, loss of frequency lock, and so on in one of the lanes. Each of the PHY devices 102, 103 and the hosts 20, 30 comprises a failure management circuit shown at 200-1, 200-2, 200-3, 200-4 (collectively called the failure management circuits 200 and individually called the failure management circuit 200 of the respective device). The failure management circuits 200 can communicate with each other. For example, the failure management circuits 200 of the hosts can communicate with the failure management circuits 200 of the PHY devices 102, 104 via the SERDESs 27, 37; and the failure management circuits 200 of the PHY devices 102, 104 can communicate with each other via the SERDESs 54, 64 (using the same physical lanes as those used for data transfer between the PHY devices 102, 104). The failure management circuits 200 of the PHY devices 102, 104 also communicate with elements 50, 112, 60, 124 of the PHY devices 102, 104.

The failure management circuits 200 of the PHY devices 102, 104 can detect a failed lane between of the PHY devices 102, 104 based on a higher bit error rate (BER) in one of the lanes compared to the other lanes. The failure management circuits 200 of the PHY devices 102, 104 can also detect a failed lane by detecting a loss of signal, loss of frequency lock, and so on in one of the lanes. The failure management circuits 200 of the PHY devices 102, 104 trigger the fault-tolerate operations of the PHY devices 102, 104 (e.g., dynamic lane mapping in the PHY device 102 and lane alignment in the PHY device 104) upon detecting a lane failure, which are described below in detail. The failure management circuits 200 of the hosts 20, 30 trigger data rate reduction of the lanes between the hosts 20, 30 and the PHY devices 102, 104.

Accordingly, in general, after a lane failure is detected, the interfaces between the hosts 20, 30 and the PHY devices 102, 104 remain at the same number of physical lanes (N) but the data rate per lane is reduced to (N-M)/N of the nominal rate (e.g., with N=8, M=1, and nominal data rate of 212.5Gbps, to (7/8)*212.5Gbps=189.9Gbps). The interface between PHY devices 102, 104 reduces to (N-M) lanes with the data rate per lane being the same as the nominal rate (e.g., 212.5Gbps). The total bandwidth between the hosts 20, 30 and the PHY devices 102, 104 is the same as the total bandwidth between the PHY devices 102, 104, which is (N-M)/N of the total bandwidth before the failure occurs (e.g., with M=1, bandwidth before failure is 1.6Tbps, bandwidth after failure is 1.4Tbps). The PHY devices 102, 104 handle the data mapping between N lanes @ (N-M)/N nominal rate and (N-M)/N lanes at nominal rate using dynamic lane mapping at the PHY device 102 and using dynamic lane alignment at the PHY device 104 as follows.

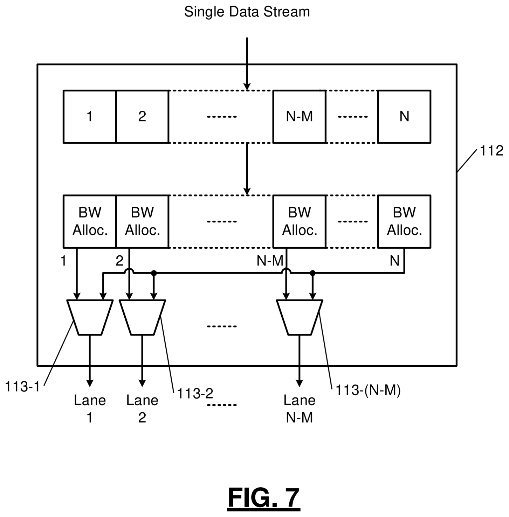

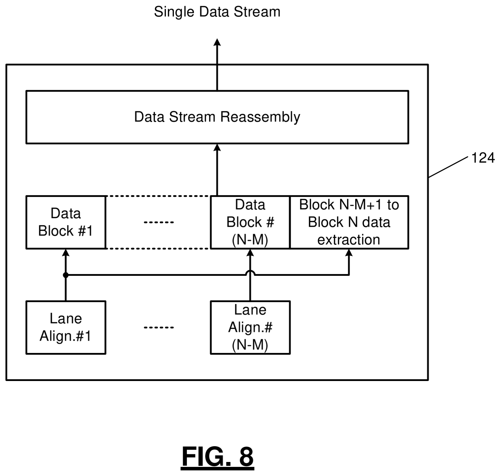

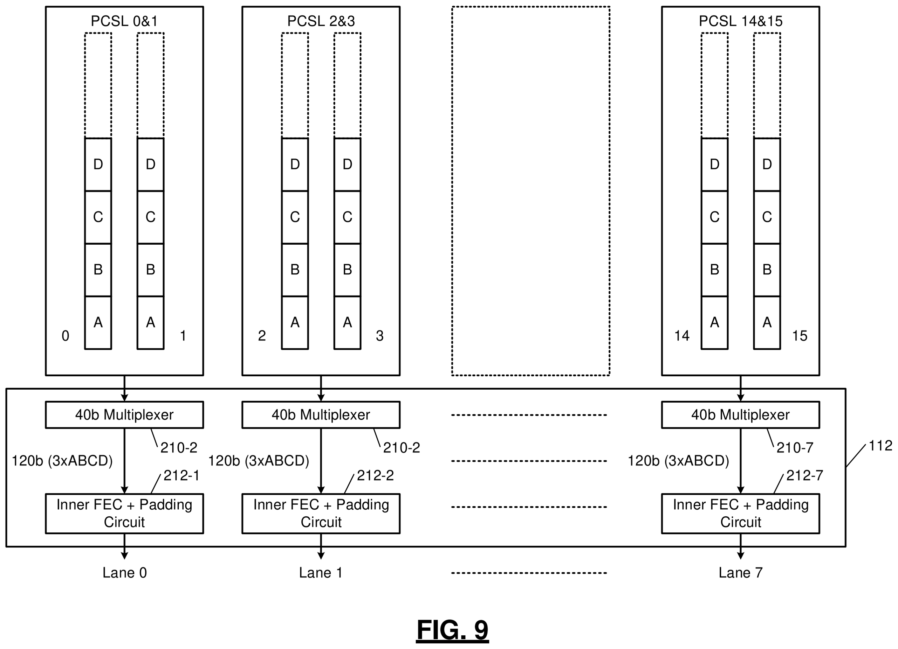

FIGS. 7 and 8 show the dynamic lane mapping performed by the lane distribution circuit 112 of the PHY device 102 and the dynamic lane alignment performed by the lane alignment circuit 124 of the PHY device 104, respectively. The circuits of the lane distribution circuit 112 and the lane alignment circuit 124 that perform the operations described below are shown and described in further detail with reference to FIGS. 9-13. The notations used in FIGS. 7 and 8 and the following description of FIGS. 7 and 8 are as follows: N is the total number of lanes (e.g., N=8), and M is the number of failed lanes (e.g., M=1). FIGS. 9-13 show examples of the dynamic lane mapping and the dynamic lane alignment in further detail.

FIG. 7 shows the lane distribution circuit 112 of the PHY device 102. The lane distribution circuit 112 comprises a plurality of multiplexers 113-1, 113-2, ..., 113-N-M, where N=8 and M=1, for example. The multiplexers are collectively called the multiplexers 113 and individually called the multiplexer 113. The lane distribution circuit 112 performs dynamic lane mapping of N lanes (e.g., N=8) received from the host 20 to N-M lanes (e.g., 7 lanes with M=1) on which data is transmitted from the PHY device 102 over the communication channel 40 due a failure of M lanes (e.g., M=1; e.g., 8^{th} lane between the PHY devices 102, 104). The lane distribution circuit 112 converts the data (codewords) received from the PCS FEC encoder 50 to a single data stream. The lane distribution circuit 112 splits the data stream comprising the codewords into data blocks 1, 2, ..., N-M, ..., N with each data block comprising the same amount of data (equal number of codewords). The lane distribution circuit 112 allocates bandwidth to each data block as follows. For data blocks 1 to N-M, each data block occupies (N-M)/N% of a respective lane from lanes 1 to N-M. For data blocks N-M+1 to N, which belong to the Nth lane (e.g., the 8^{th} lane corresponding to the failed lane between the PHY devices 102, 104), each data block occupies 1/N% of each lane from lanes 1 to N-M. The multiplexers 113 multiplex the data from the Nth (e.g., 8^{th}) lane with the data from the N-M lanes. Thus, data from N lanes (e.g., 8 lanes) is mapped (multiplexed) into N-M lanes (e.g., 7 lanes).

FIG. 8 shows the lane alignment circuit 124 of the PHY device 104. The lane alignment circuit 124 performs dynamic lane alignment of N-M lanes (e.g., 7 lanes) received from the communication channel 40 due a failure of M lanes (e.g., M=1) to N lanes (e.g., 8 lanes) on which data is forwarded to the host 30 for further processing. The lane alignment circuit 124 locates boundaries of different data blocks in the same physical lane. The lane alignment circuit 124 rearranges the data blocks from 1, 2, ..., N-M, ..., N. The lane alignment circuit 124 reassembles the data blocks into a single data stream that is forwarded to the PCS FEC decoder 60. Thus, data from N-M lanes (e.g., 7 lanes) is aligned and mapped to N lanes (e.g., 8 lanes).

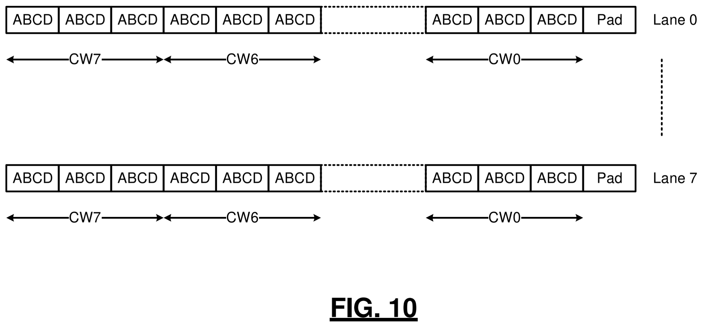

FIGS. 9 and 10 show an example of lane mapping performed by the lane distribution circuit 112 of the PHY device 102 when all 8 lanes are operating normally (i.e., with no lane failure). PCLS denotes logical PCS lanes. In the PCS FEC encoder 50, two logical lanes are mapped to each physical lane. Accordingly, 16 logical lanes PCSLO to PCSL15 are mapped to 8 physical lanes 0-7. Each PCLS comprises a plurality of 40-bit blocks ABCD. ABCD is a 40-bit block comprising four 10-bit RSFEC symbols, where one symbol is received from each of four RSFEC engines (A, B, C, D) used to encode data in the PCS FEC encoder 50.

The lane distribution circuit 112 of the PHY device 102 comprises multiplexers 210-1, 210-2, ..., and 210-7 (collectively called the multiplexers 210 and individually called the multiplexer 210), one multiplexer 210 for each of the 8 physical lanes 0-7. The lane distribution circuit 112 comprises inner FEC and padding circuits 212-1, 212-2, ..., and 212-7 (collectively called the inner FEC and padding circuits 212 and individually called the inner FEC and padding circuit 212), one inner FEC and padding circuit 212 for each of the 8 physical lanes 0-7. The multiplexers 210 receive data from PCSLs 0-15 and output multiplex data to the inner FEC and padding circuits 212 as described below.

For each physical lane (Lane 0-7), a 40b (40 bit) multiplexer 210 multiplexes the data (40b ABCD blocks) from two PCSLs of the physical lane in round-robin manner. The multiplexer 210 feeds the multiplexed blocks, 120b (3 multiplexed blocks of ABCD) at a time, to an inner FEC and padding circuit 212 for the physical lane. The inner FEC and padding circuit 212 encodes the multiplexed blocks (3 blocks at a time) using an inner FEC code to form codewords (CWO, CW1, ... shown in FIG. 10). The inner FEC and padding circuit 212 adds padding after every 8 codewords. The inner FEC and padding circuits 212 output the codewords with the added padding (collectively called an inner FEC payload) to respective physical lanes 0-7 as shown in FIG. 10 for transmission over the communication channel 40. The padding is generally used for data alignment when the PHY device 104 receives the inner FEC payload over the remaining operating lanes 0-6. Based on the padding, the PHY device 104 initiates lane alignment operation.

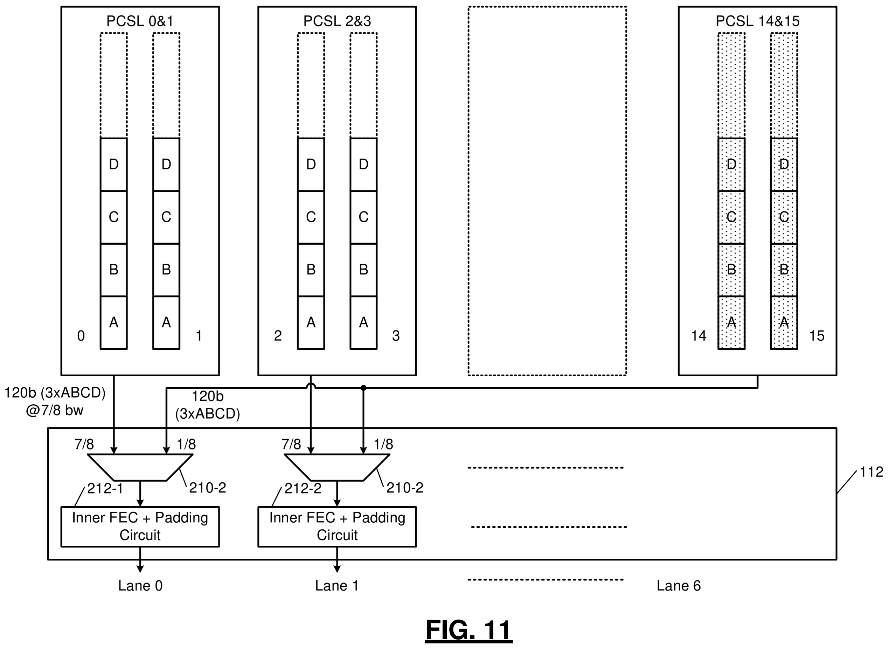

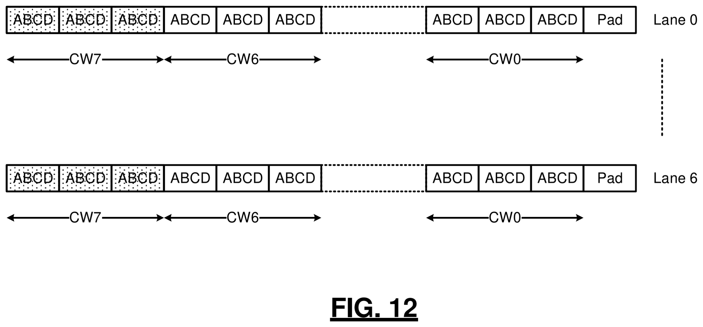

FIGS. 11 and 12 show an example of lane mapping performed by the lane distribution circuit 112 when one of the 8 physical lanes (e.g., lane 7) fails between the PHY devices 102, 104. The failed physical lane and the data from the failed physical lane that is mapped onto the operating physical lanes (lanes 0-6) are shown shaded. The lane shown shaded, though called a failed lane, is an operating lane between the host 20 and the PHY device 102 and corresponds to the lane that has failed between the PHY devices 102, 104. The lane distribution circuit 112 splits (distributes) and maps the data from the failed physical lane (e.g., lane 7) to the remaining operating 7 physical lanes (lanes 0-6). The mapping shown in FIGS. 11 and 12 differs from the mapping shown in FIGS. 9 and 10 as follows.

The traffic per lane for the operating physical lanes 0-6 is reduced to 7/8^{th} of the total bandwidth (bw) to reserve 1/8^{th} of the bandwidth in each lane for adding the data from the failed physical lane (lane 7). The data from the failed physical lane (lane 7) is also reduced to 7/8 of the original bandwidth. The data from the failed physical lane (lane 7) is split and distributed equally into 7 sub-streams (shown as 1/8 in FIG. 11), 120b at a time (equivalent to an Inner FEC payload). The 7 sub-streams are multiplexed by the multiplexers 210 with the remaining 7 operating physical lanes as described above with reference to FIGS. 9 and 10. Accordingly, each multiplexer 210 multiplexes (i) data from a respective one of the lanes from the host 20 corresponding to the remaining 7 operating physical lanes (lanes 0-6) between the PHY devices 102, 104 and (ii) a portion of data from 8^{th} lane from the host 20 corresponding to the detected failed lane (lane 7) between the PHY devices 102, 104. The position of these sub-streams is fixed at CW7 as shown in FIG. 12 to facilitate their location and to perform lane alignment at the PHY device 104 as described below. The inner FEC and padding circuits 212 encode the multiplexed data, add padding to the encoded data, output the codewords with the added padding as described above with reference to FIGS. 9 and 10.

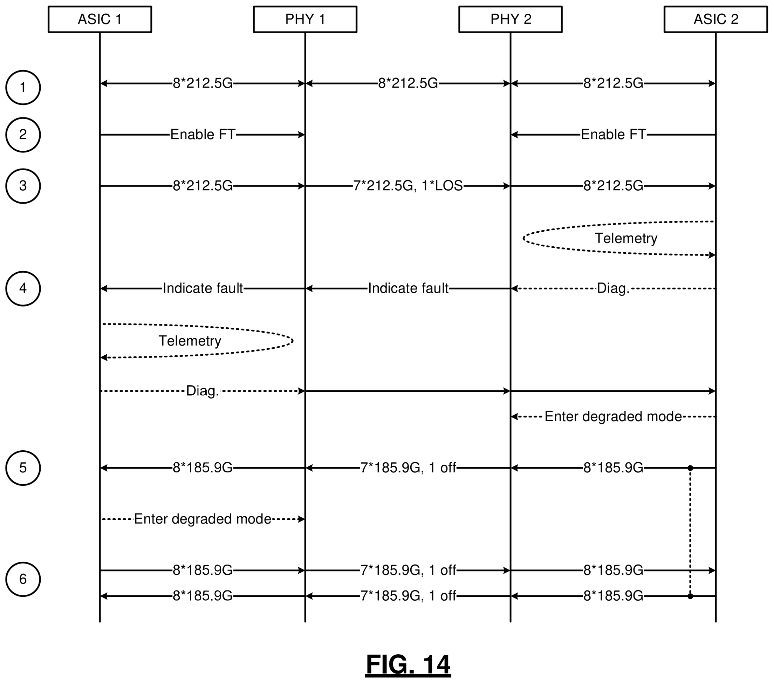

However, when a lane failure is detected, the padding is modified to trigger or initiate fault tolerance operations in the receiving PHY device as follows. Suppose the PHY deice 102 is transmitting data and the PHY device 104 is receiving the data via the communication channel 40. Suppose further that the PHY device 104 detects a lane failure. When the PHY device 104 detects a lane failure, the PHY device 104 selects a bit in the padding. The selected bit in the padding is not used, is reserved for a future use, and is ignored when the fault tolerance feature is not used between the PHY devices 102, 104 (e.g., in FIGS. 9 and 10). The PHY device 104 uses the selected bit in the padding to indicate lane failure. When the PHY device 102 receives data from the PHY device 104 through the communication channel 40, the PHY device 102 does not ignore but checks the selected bit in the padding. If the selected bit in the padding indicates a lane failure, the PHY device 102 initiates fault tolerant operation to recover the data on the failed lane as described below with reference to FIG. 14. Thus, by utilizing a reserved and unused bit in the padding to indicate lane failure, the fault tolerant feature can be implemented without adding overhead.

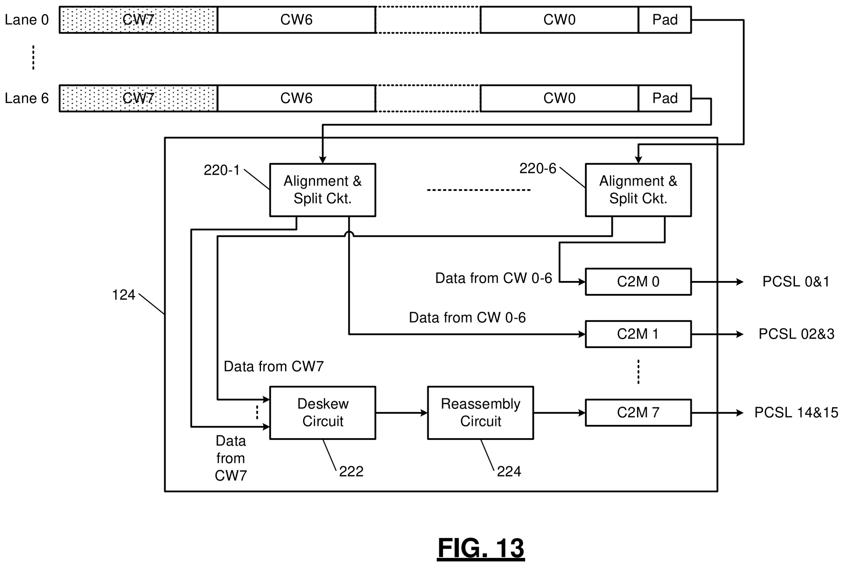

FIG. 13 shows an example of lane alignment performed by the lane alignment circuit 124 of the PHY device 104 when one of the 8 physical lanes (e.g., lane 7) fails. The failed physical lane and the data from the failed physical lane that is mapped onto the operating physical lanes (lanes 0-6) are shown shaded. The lane alignment circuit 124 infers from the padding received in the operating lanes 0-6 that a lane has failed. The position (location) of CW7 in the data received in the operating lanes 0-6 indicates that the failed lane is lane 7.

The lane alignment circuit 124 comprises alignment and split circuits 220-1, ..., 220-6 (collectively called the alignment and split circuits 220 and individually called the alignment and split circuit 220). The lane alignment circuit 124 comprises a deskew circuit 222 and a reassembly circuit 224. Using the alignment and split circuits 220, the deskew circuit 222, and the reassembly circuit 224, the lane alignment circuit 124 reconstructs and remaps the 7 operating lanes (lanes 0-6) comprising the data from the failed 8^{th} lane (lane 7) as follows.

Each alignment and split circuit 220 receives data from a respective physical lane 0-6 (lane 7 having failed). Each of the 7 physical lanes 0-6 comprises the data from the failed lane (lane 7) as described above with reference to FIGS. 11 and 12. Each alignment and split circuit 220 aligns the data in the respective physical lane using the fixed location of CW7 (described above) and splits the aligned data into two portion: a first portion comprising codewords CWO-6 and a second portion comprising codeword CW7 (added to each physical lane 0-6 from the failed lane 7). The first portions from the alignment and split circuit 220 are output via a respective chip-to-module (C2M) interface as two PCSLs to the PCS FEC decoder 60. Thus, the PCS FEC decoder 60 receives data from the 7 operating physical lanes 0-6.

To reconstruct the failed 8^{th} lane (lane 7), the second portion comprising the codewords CW7 from each operating physical lane 0-6 is input to the deskew circuit 222. The deskew circuit 222 removes any skew between the codewords CW7 from each operating physical lane 0-6. The reassembly circuit 224 reassembles the deskewed codewords CW7 from each operating physical lane 0-6 to form the physical lane 7 and outputs the 8^{th} lane (lane 7) via a respective chip-to-module (C2M) interface as two PCSLs (PCSL 14 & 15) to the PCS FEC decoder 60. Thus, the PCS FEC decoder 60 receives data from the 7 operating physical lanes 0-6 and the reconstructed 8^{th} lane (lane 7).

FIG. 14 shows an example of the handshake performed by the hosts 20, 30 and the PHY devices 102, 104 to perform the operations described above with reference to FIGS. 4-13. The steps of the handshake are shown as 1 to 6. Each step is described below.

In steps 1 and 2, the hosts 20, 30 and the PHY devices 102, 104 start a link-up sequence with fault tolerance (FT) feature enabled. In steps 3 and 4, a lane from the PHY device 102 to the PHY device 104 (e.g., lane 7) is detected as failed. The PHY device 104 detects the lane failure and initializes the lane mapping operation described above to switch over the data from the failed lane (e.g., lane 7) to the remaining operating lanes (e.g., lanes 0-6). The PHY device 104 notifies the host 30 that one (or more) lanes has failed using an Ethernet local fault (LF).

The host 30 starts a telemetry sequence to detect how many lanes have failed. One example of telemetry exchange is using different PRBS (31/23/11) to detect different faults. PRBS or pseudorandom binary sequence is a sequence of 1s and 0s used as a test pattern to evaluate performance of optical transmitters and receivers. PRBS31 is a test pattern used to evaluate performance and data integrity of optical transceivers and networks. PRBS31 is a sequence of 1s and 0s that repeats after 2³¹-1 bits and provides a statistically random but deterministic pattern that acts as a worst-case stress test to reveal bit errors and ensure the link can handle noisy, unpredictable data. PRBS23 is a specific sequence used as a test signal to evaluate performance and integrity of high-speed transmission links (e.g., the communication channel 40). PRBS23 mimics a random data stream to stress-test the link under realistic conditions and has a defined length of 2²³-1 bits. PRBS11 is repeatable test pattern used to evaluate performance of high-speed data links (e.g., the communication channel 40). PRBS11 is a specific type of test signal that mimics a statistically random data stream to stress-test the physical layer (e.g., the PHY devices 102, 104). Using different PRBS (31/23/11), lane faults can be detected.

If only one lane has failed, the FT switch-over sequence is activated. If more than one lane has failed, the failure management circuits 200 can take control and decide whether to activate the FT switch-over sequence (lane mapping) or to adopt another approach (e.g., rate adaptation described below) to maintain the link despite the failure of more than one lane. The failure management circuits 200 can also determine if the PHY devices 102, 104 are equipped with other mechanisms (e.g., adding parity lane as described below) to maintain the link and activate them to maintain the link despite the failure of more than one lane.

At the same time, the PHY device 104 notifies the lane failure to the PHY device 102 (e.g., using a reserved bit in the padding described above). The PHY device 102 then notifies the host 20 that a lane has failed. The hosts 20, 30 and the PHY devices 102, 104 start reducing bandwidth of the remaining operating lanes to 7/8^{th} of the nominal bandwidth. The PHY devices 102, 104 also reconfigure the data path to dynamic lane mapping mode.

In steps 5 and 6, the hosts 20, 30 and the PHY devices 102, 104 finish the switch-over sequence. At the end of step 6, the FT mode is in full operational, and the link is maintained despite the lane failure. The link is maintained in a degraded mode due to the lane failure.

In some implementations, instead of the PHY devices 102, 104, the hosts 20, 30 can implement the lane mapping and lane alignments functions described above. Specifically, to maintain the link despite lane failure, instead of keeping N lanes and reducing the data rate of the N lanes to (N-M)/N of the nominal data rate at the host-to-PHY interface, the hosts 20, 30 can disable M lanes from the host-to-PHY interface, where M is the number of failed lanes between the PHY devices 102, 104. Instead of the PHY devices 102, 104, the hosts 20, 30 can then implement the lane mapping and lane alignment functions described above.

Alternatively, in some examples, the data rate of the physical lanes at the host-to-PHY interface can be different than the data rate of the physical (optical) lanes at the PHY-to-PHY interface. For example, data can be transferred from host 20 to the PHY device 102 at 1.6T over 16x100G physical lanes instead of 8x200G physical lanes, and the optical lanes between the PHY devices 102, 104 can be still 8x200G. In this case, when one optical lane is down, the hosts 20, 30 can turn off 2x100G lanes between the hosts 20, 30 and the PHY devices 102, 104. Again, in this scenario, instead of the PHY devices 102, 104, the hosts 20, 30 can implement the lane mapping and lane alignments functions described above.

In other examples, when a lane between the PHY devices 102, 104 fails, the hosts 20, 30 can keep the same data rate (instead of reducing the data rate by 7/8) for the 8 lanes between the hosts 20, 30 and the PHY devices 102, 104; and the PHY devices 102, 104 can boost (increase) the data rates of the remaining optical lanes (lanes 0-6) that remain operational between the PHY devices 102, 104 to 8/7 times the nominal data rate. For example, in FIGS. 7 and 11, the lane distribution circuit 112 can increase the data rate of each of the 7 remaining operating physical lanes (lanes 0-6) to greater than the nominal data rate; and in FIGS. 8 and 13, the lane alignment circuit 124 can revert the data rate of the 7 remaining operating physical lanes (lanes 0-6) to the nominal data rate. For example, elements 112 and 124 can employ a gearbox to alter data rate of the lanes as described. For example, a gearbox can read data from input lanes into a FIFO buffer at a first data rate and can output the data from the FIFO buffer to output lanes at a second data rate that is different than the first data rate.

An example of boosting the data rate of the surviving lanes between the PHY devices is described below with reference to FIG. 18. However, the example of boosting the data rate described in this paragraph differs from the description of FIG. 18. Specifically, in the example described in this paragraph, the data rate of the surviving lanes is boosted after a lane failure occurs between the PHY devices. In contrast, in the embodiment shown in FIG. 18, the data rate is boosted to proactively add a parity lane between the PHY devices before a lane failure occurs.

FIG. 15 shows an embodiment in which instead of the hosts 20, 30 reducing the data rate of the 8 lanes between the hosts 20, 30 and the PHY devices 102, 104, the PHY devices 102, 104 perform rate adaptation in addition to dynamic lane mapping and lane alignment when a physical lane fails. Rate adaptation relies on the actual traffic from the host being less by nearly 20-30% than the system specification (e.g., 1.6Tbps at which the devices are designed to operate). For example, even if the physical interface between host and the PHY device is rated (designed) to operate at 1.6Tbps bandwidth, in reality only about 70% of the total bandwidth (about 1.12Tbps) is used. For example, when one of the 8 lanes between the PHY devices 102, 104 fails, instead of triggering the host 20/30 to reduce the data rate of the 8 physical lane between the host and the PHY device from 8x200Gbps to 8x(200x7/8) and applying the dynamic lane mapping, the actually used 70% of the 1.6Tbps data can be transferred to 7x200Gbps operating lanes on the optical side using rate adaptation as follows.

In Ethernet, a slight difference in the nominal frequency of the transmit and receive clocks, measured in parts-per-million (ppm). Offset between the transmit and receive clocks due to different ppm clocks creates a mismatch between input and output data rates. To compensate for the offset and to match the input and output data rates, a rate adaptation technique of adding/removing idle codewords between Ethernet packets is used to match the data rates between input and output when the data rates differ due to different ppm clocks.

Instead, in the present disclosure, the rate adaptation technique of adding/removing idle codewords is used to adjust the data rates of the lanes when a lane fails. Notably, for ppm compensation, a low percentage of codewords are added/removed (e.g., 0.01% for compensating offset up to 100ppm). In contrast, in the present disclosure, a much higher percentage (e.g., up to 12.5%) of codewords is added/removed to adjust the data rates of the lanes when a lane fails.

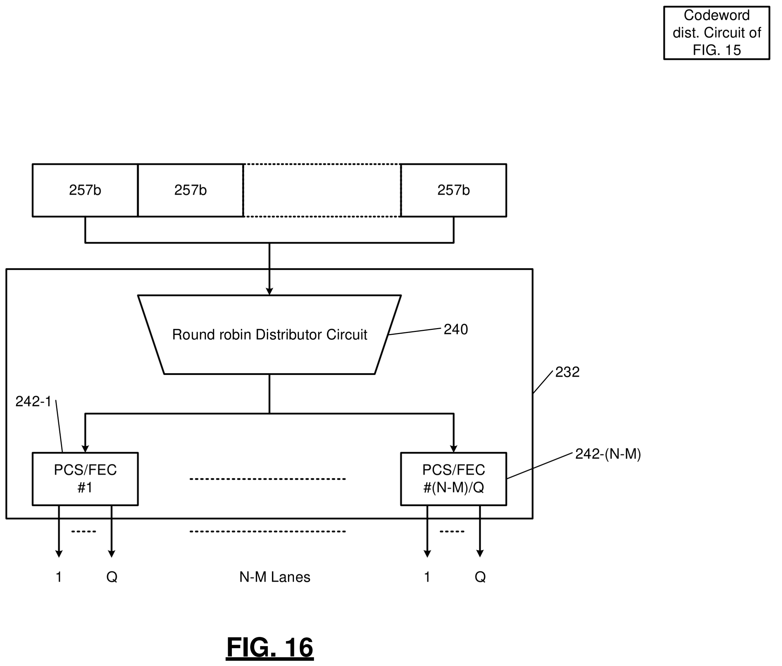

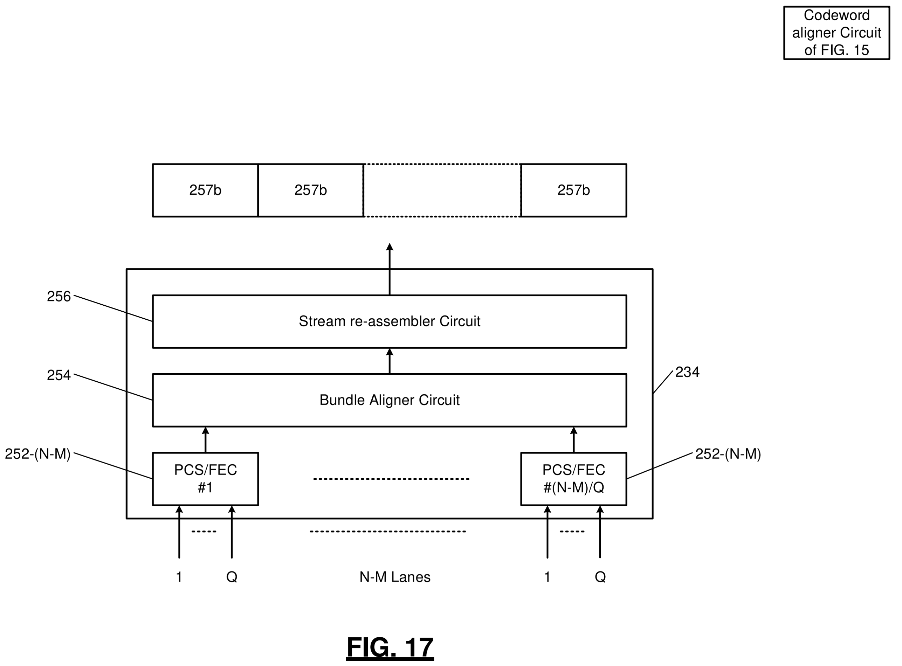

In FIG. 15, for example, a system 101 comprises the hosts 20, 30 without the failure management circuits 200 shown in FIGS. 4-13. Instead, PHY devices 103, 105 additionally comprise rate adaptation features (elements 230, 232, 234 described below) that operate in conjunction with the lane mapping and lane alignment features described above. Elements of FIG. 15 that are identified by the same reference numerals as in FIGS. 4-14 are not described again for brevity. The elements 232 and 234 are described below with reference to FIGS. 16 and 17.

In the system 101, the PHY device 103 comprises the elements of the PHY device 102 and additionally comprises a rate adapter circuit 230 and a codeword (CW) distributor circuit 232. The PHY device 105 comprises the elements of the PHY device 104 and additionally comprises a codeword (CW) aligner circuit 234. The failure management circuits 200 of the PHY devices 103, 105 communicate with the elements 230, 232, 234. The failure management circuit 200-3 of the PHY device 103 can monitor the communication channel 40 and provide an indication to the rate adapter circuit 230. The rate adapter circuit 230 can adjust the data rate of the lanes using the rate adaptation technique described above based on the feedback about lane failure from the failure management circuit 200-4.

When all the lanes are operating normally (i.e., none of the lanes has failed), the elements 232 and 112 utilize all the N physical lanes for data transfer. When a lane failure is detected on M of the N lanes, the failure management circuit 200-4 notifies the failure management circuit 200-3 that M lanes have failed. The notification includes a lane ID of the failed lane. The failure management circuit 200-3 indicates to the elements 230, 232, 112 to change from N physical lanes to (N-M) physical lanes.

At the same time, the failure management circuit 200-3 also sends an acknowledgment back to the failure management circuit 200-4 that the notification of lane failure is received and that lane mapping is performed. The acknowledgement also includes other information for the PHY device 105 to start the process of changing from N lanes to (N-M) lanes using lane alignment. The elements 230, 232, 234 together with the elements 112 and 124 initiate the change from N lanes to (N-M) lanes and continue the data transfer through the communication link 40.

FIG. 16 shows the CW distributor circuit 232. After the rate adaptation performed by the rate adapter circuit 230 as described above, the bandwidth of the data is about 1.4Tbps (e.g., comprising useful data at about 1.12Tbps and idle data at about 0.28Tbps). Following the rate adaptation, the data output from the rate adapter circuit 230 is in the form of 257b (257 bit) blocks and is input to the CW distributor circuit 232. The CW distributor circuit 232 distributes the rate adapted data at 1.4Tbps to 7x200G lanes.

The rate adapted data at 1.4Tbps can be distributed to 7x200G lanes in multiple ways. For example, the rate adapted data at 1.4Tbps can be distributed to 7x200G lanes using the dynamic lane alignment performed by the lane distribution circuit 112 as described above. In this case, the CW distributor circuit 232 is different from the CW distributor circuit 232 shown in FIG. 16 and is instead similar to the PSC FEC encoder 50 but scaled down to about 1.4Tbps. On the receive side, the lane alignment circuit 124 converts the 7x200G lanes back to 8 lanes as described above and without using the CW aligner circuit 234.

Alternatively, the CW distributor circuit 232 can send the 1.4Tbps rate adapted data over 7x200Gbps lanes with each 200Gbps lane having its own separate PCS/FEC as shown in FIG. 16. In this case, the lane distribution circuit 112 is not needed for dynamic lane alignment since each 200Gbps of rate adapted data has its own physical lane as shown in FIG. 16. On the receive side, the CW aligner circuit 234 combines the data received from 7 independent 200Gbps lanes as shown in FIG. 17.

In FIG. 16, the CW distributor circuit 232 comprises a round robin distributor circuit 240 and a plurality of PCS/FEC circuits 242-1, ..., and 242-(N-M). The PCS/FEC circuits 242-1, ..., and 242-(N-M) are collectively called the PCS/FEC circuits 242 and individually called the PCS/FEC circuit 242. The round robin distributor circuit 240 receives a single stream of rate adapted data blocks organized 257-bit blocks (described above). The round robin distributor circuit 240 distributes the data blocks in a round robin manner to the PCS/FEC circuits 242 to distribute the data blocks to (N-M)/Q independent PCS/FEC circuits 242. Each PCS/FEC circuit 242 encodes the data the distributed data blocks using an error-correcting code and outputs the encoded distributed data blocks over Q physical lanes. The Q physical lanes are output over N-M lanes to element 54 shown in FIG. 15. The lane distribution circuit 112 is not needed for dynamic lane mapping as described above.

FIG. 17 shows the CW aligner circuit 234. The CW aligner circuit 234 comprises a plurality of PCS/FEC circuits 252-1, ..., and 252-(N-M) (collectively called the PCS/FEC circuits 252 and individually called the PCS/FEC circuit 252); a bundle aligner circuit 254, and a stream re-assembler circuit 256. Each of the PCS/FEC circuits 252-1, ..., and 252-(N-M) receives the rate adapted data received over N-M lanes from element 64 on respective Q lanes and decodes the received data using the same error-correcting code using by elements 242 to encode the data. The lane alignment circuit 124 is not used as described above. The bundle aligner circuit 254 aligns the decoded data from all the PCS/FEC circuits 252. The stream re-assembler circuit 256 reassembles the aligned decoded data from the bundle aligner circuit 254 back to a single data stream that is fed to element 60. The CW aligner circuit 234, or the lane alignment circuit 124 when alternatively used, also increases the data rate of the rate adapted data back to nominal data rate (e.g., using a gearbox).

Accordingly, in the rate adaptation embodiment described above with reference to FIGS. 15-17, in addition to using the rate adapter circuit 230, the system 101 can use only the dynamic lane mapping and the dynamic lane alignment pair (i.e., elements 112 and 124) and not use elements 232 and 234. Alternatively, in addition to using the rate adapter circuit 230, the system 101 can use only the elements 232 and 234 and not use the dynamic lane mapping and the dynamic lane alignment (i.e., elements 112 and 124) as described above. Further, the embodiment shown in FIGS. 4-14, neither the rate adaptation (i.e., the rate adapter circuit 230) nor the elements 232 and 234 are used. Yet, in all of the embodiments described in FIGS. 4-17, the link is maintained despite a lane failure between the PHY devices as described above. Furthermore, the above functionalities can be implemented in the hosts, or in the PHY devices, or partially in both the hosts and the PHY devices as described above.

FIG. 18 shows an embodiment comprising a combination of the dynamic lane mapping and the rate adaptation feature shown in FIGS. 4-17 with the addition of a parity lane feature for erasure mode of operation according to the present disclosure. A system 111 comprises the hosts 20, 30 and PHY devices 262, 264. The PHY devices 262, 264 comprise all elements of the PHY devices 103, 105. In the PHY devices 262, 264, the rate adaptation features (elements 230, 232, 234) operate in conjunction with the lane mapping and lane alignment features as described above. Additionally, the PHY device 262 comprises a parity adder circuit 114, and the PHY device 264 comprises an erasure repair circuit 122. Elements of FIG. 18 that are identified by the same reference numerals as in FIGS. 4-17 are not described again for brevity. The parity adder circuit 114 and the erasure repair circuit 122 are briefly described below. The parity lane feature is described in further detail in commonly assigned U.S. Application No. ____, filed on___ (MP14399). The entire disclosure of the commonly assigned U.S. Application No. ____, filed on___ (MP14399) is incorporated herein by reference.

The parity adder circuit 114 comprises an erasure encoder. The erasure repair circuit 122 comprises an erasure decoder. The lane distribution circuit 112 distributes data on P lanes at a data rate X to Q-S lanes at a data rate Y>X, where P and Q are integers greater than 1, S is an integer (e.g., S=0 or 1) denoting the number of parity lanes, and P=Q+S. The lane distribution circuit 112 maps P lanes at a data rate X to Q-S lanes at a data rate Y>X. For example, each of the P lanes (e.g., P=8) carries data at a data rate X (e.g., 200Gbps or less as adapted by the rate adapter circuit 230). The lane distribution circuit 112 outputs the Q-S lanes to the parity adder circuit 114 with each of the Q-S lanes operating at a boosted data rate Y. For example, Y=(8/7)*X. The parity adder circuit 114 generates parity information based on the data in the Q-S lanes. The parity adder circuit 114 generates a parity lane that carries the parity information. Thus, for example, when P=8 and S=1, 7 data lanes are input to the parity adder circuit 114 at the boosted data rate, and the parity adder circuit 114 outputs the 8 data lanes including 1 parity lane at the boosted data rate. Alternatively, the parity adder circuit 114 can receive data on P lanes at a data rate X (e.g., the lane distribution circuit 112 mapping P lanes to P lanes), generate a parity lane based on the data in the P lanes (i.e., S=1), and output P+1 lanes with each of the P+1 lanes operating at a data rate Y (Y<X).

The PHY device 264 on the receive side can operate in a first mode or a second mode. In the first mode, when all lanes are operating normally (i.e., without any lane failure), the PHY device 264 processes the received data normally. The PHY device 264 can ignore the parity information in the parity lane. Alternatively, though none of the lanes has failed but one or more lanes has errors, the PHY device 264 can use the parity information in the parity lane for correcting any errors in the data in any of the lanes. In the second mode, when one of the lanes fails, the PHY device 264 can recover the data in the failed lane using the parity information in the parity lane. The error correction and the error recovery are performed based on the location of the parity information called erasure.

In the parity adder circuit 114, the erasure encoder can generate a parity bit based on number of 1's across the 8 lanes. Alternatively, instead of a single bit granularity, the erasure encoder can generate parity information at a higher granularity (e.g., based on a group of bits across the 8 lanes, where the groups are temporally and spatially concurrent or aligned). The erasure encoder can also use other more sophisticated erasure code encoding schemes. While some of these schemes can incur different amounts of bandwidth overhead, the schemes can also provide enhancements. For example, the schemes can obviate the need for mechanisms used to detect a failed lane and can provide protection against additional number of failed lanes.

In the PHY device 264, the lane alignment circuit 124 synchronizes and aligns data streams received across different lanes and outputs the synchronized and aligned lanes (Q lanes if using an additional parity lane or P lanes if using parity information embedded in P lanes). The lane alignment circuit 124 outputs the synchronized and aligned lanes to the erasure repair circuit 122. In the erasure repair circuit 122, the erasure decoder decodes the data in each lane received from the lane alignment circuit 124. The erasure decoder corrects the data in any of the lanes and/or recovers data from a failed lane based on the parity information in the parity lane. The erasure decoder outputs P lanes (error-corrected and/or repaired) with each of the P lanes operating at the data rate X (e.g., 8 lanes operating at 200Gbps) for further processing.

For example, the PHY device 264 can detect a failed lane based on a higher bit error rate (BER) in one of the lanes compared to the other lanes. The PHY device 264 can also detect a failed lane by detecting a loss of signal, loss of frequency lock, and so on in one of the lanes. Depending on a lane failure, the erasure decoder in the erasure repair circuit 122 can operate in a first mode or a second mode. In the first mode, when all lanes are operating normally (i.e., without any lane failure), the erasure decoder processes the received data normally. The erasure decoder can ignore the parity information in the parity lane. Alternatively, the erasure decoder can use the parity information in the parity lane for correcting any errors in the data in any of the lanes.

In the second mode, when one of the lanes fails, the erasure decoder can recover the data in the failed lane by using the parity information in the parity lane P. The error correction and the error recovery are performed based on the location of the parity information in the parity lane. The erasure encoding and decoding provide data resilience and tolerance for data loss (due to errors in an operating lane or due to a failed lane). The erasure decoder calculates the corrupted or missing data (in an operating lane or a failed lane) from the remaining data (in the operating lane or in other operating lanes) using the same coding matrix used during encoding.

The embodiment using a parity lane shown in FIG. 18 can be augmented to maintain the link between the PHY device 262 and the PHY device 264 when an additional lane (more than one lane) fails. When a first lane failure is detected (i.e., when one of the 8 data lanes fails), the added parity lane (first parity lane) is used in conjunction with the remaining 7 data lanes to repair and recover data in the first faulted lane as described above. At this point, the Q lanes include the 7 operational data lanes, the first parity lane, and the first failed lane (i.e., Q=9). After eliminating the first failed lane (to be repaired or serviced later), Q-1 or 8 lanes (7 surviving operational data lanes plus the first parity lane) remain in operation.

The erasure encoder of the parity adder circuit 114 can be configured to repurpose one of the surviving 7 data lanes to serve as a new second parity lane resulting in two parity lanes, Q-3 or 6 data lanes, and one out-of-service failed lane (thus, 2 parity lanes, 6 data lanes and one out-of-service failed lane still make Q=9). At this point, the second parity lane can provide protection against a second failed data lane (e.g., if one of the 6 surviving data lanes, after having repurposed the 7^{th} surviving data lane as the new second parity lane, fails). The second parity lane can be used to reconstruct data from the second failed data lane in the same manner as the first parity lane can be used to reconstruct data from the first failed data lane, which is described above.

The second parity lane adds bandwidth overhead since the number of data lanes is reduced to 6. To compensate for the added overhead, the PHY device 262 can use several techniques. For example, the PHY device 262 can reconfigure the data rate of the SERDES 54 or the PCS FEC encoder 50. Alternatively, the PHY device 262 can use the rate adaptation at the lane distribution circuit 112 and use the rate adaptation in conjunction with the erasure encoder of the parity adder circuit 114. Alternatively, the PHY device 262 can provide a back pressure indication such as pause frames to an upstream entity so that the upstream entity can accordingly adjust the rate at which data is fed or input to the PCS FEC encoder 50. In this manner, the PHY device 262 can repurpose one of the surviving 7 data lanes to serve as the second parity lane, which can provide protection against a second failed data lane (e.g., if one of the surviving 6 data lanes fails).

In the alternative embodiment of the system 111, elements 230 and 114 can be used with 232 and 234 instead of with elements 112, 124 as described above with reference to FIGS. 15-17. In the alternative embodiment, the parity adder circuit 114 can perform the operations described above using output of element 232 instead of using output of element 112 in the PHY device 262. The erasure repair circuit 122 can perform the operations described above using element 234 instead of using element 124 in the PHY device 264. The erasure repair circuit 122 receives data including the parity lane from element 64 instead of from element 124. The element 234 operates on the output of the erasure repair circuit 122 instead of the erasure repair circuit 122 operating on the output of the element 124 (i.e., alignment by element 234 is performed after erasure repair instead of element 124 performing alignment before erasure repair).

In FIGS. 4-18, the functions and operations performed by the PCS FEC encoder 50 and the PCS FEC decoder 60 can also be performed by other elements upstream of the PHY devices 102, 103, 262 such as the host 20 shown in FIGS. 4-18. These functions and operations can also be enabled in the PHY devices 102, 103, 262 as shown in FIGS. 4-18 to provide additional error correction layer or for telemetry purpose. However, enabling these functions and operations in the PHY devices 102, 103, 262 can also increase latency. Therefore, the PCS FEC encoder 50 and the PCS FEC decoder 60 can be omitted in the embodiments shown in FIGS. 4-18.

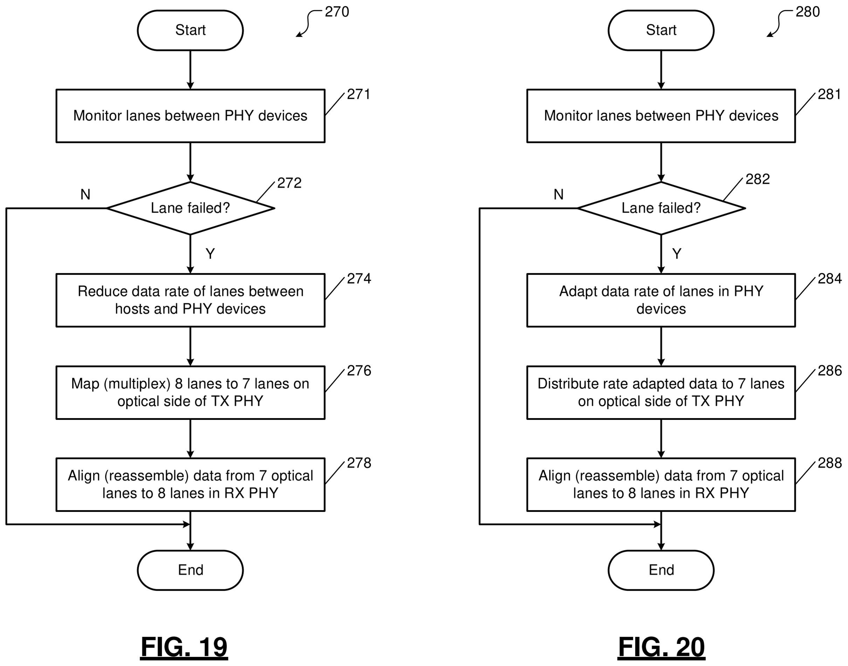

FIGS. 19-22 show methods performed by the systems 100, 101, and 111 described above. In each of the methods, the steps of the method can be performed by one or more elements of the fault-tolerant PHY devices 102, 103, 262, 104, 105, and 264 shown and described above with reference to FIGS. 4-18. Alternatively, in each of the methods, some of the steps of the method can be performed by the PHY devices and other steps of the methods can be performed by the hosts 20, 30 as described above with reference to FIGS. 4-18. In some example, in each of the methods, the steps of the method can be performed by the PHY devices and the hosts 20, 30 as described above with reference to FIGS. 4-18.

FIG. 19 shows a method 270 used by the fault-tolerant PHY devices 102, 104 of the system 100 shown in FIGS. 4-14. At 271, the PHY device monitors the lanes between the PHY devices linked by the communication channel 40 (e.g., between the PHY devices 102, 104 or between the PHY devices 103, 105). At 272, the PHY device determines if any lane between the PHY devices linked by the communication channel 40 has failed. If no lane failure is detected, the method 270 ends, and the PHY devices process the data normally without initiating the fault tolerant feature. If a lane failure is detected, at 274, the hosts 20, 30 reduce the data rate of the lanes between the hosts 20, 30 and the PHY devices linked by the communication channel 40. At 276, the PHY device on the transmit side maps (multiplexes) 8 lanes to 7 lanes on the optical side of the PHY device. At 278, the PHY device on the receive side aligns (reassembles) data from 7 lanes to 8 lanes.

FIG. 20 shows a method 280 used by the fault-tolerant PHY devices 103, 105 of the system 101 shown in FIGS. 15-17. At 281, the PHY device monitors the lanes between the PHY devices linked by the communication channel 40 (e.g., between the PHY devices 102, 104 or between the PHY devices 103, 105). At 282, the PHY device determines if any lane between the PHY devices linked by the communication channel 40 has failed. If no lane failure is detected, the method 280 ends, and the PHY devices process the data normally without initiating the fault tolerant feature. If a lane failure is detected, at 284, instead of the hosts 20, 30 reduce the data rate of the lanes between the hosts 20, 30 and the PHY devices linked by the communication channel 40, the PHY devices adapt the data rate of the lanes between the PHY devices linked by the communication channel 40. At 286, the PHY device on the transmit side distributes the rate adapted data to 7 lanes on the optical side of the PHY device. At 288, the PHY device on the receive side aligns (reassembles) data from 7 lanes to 8 lanes.

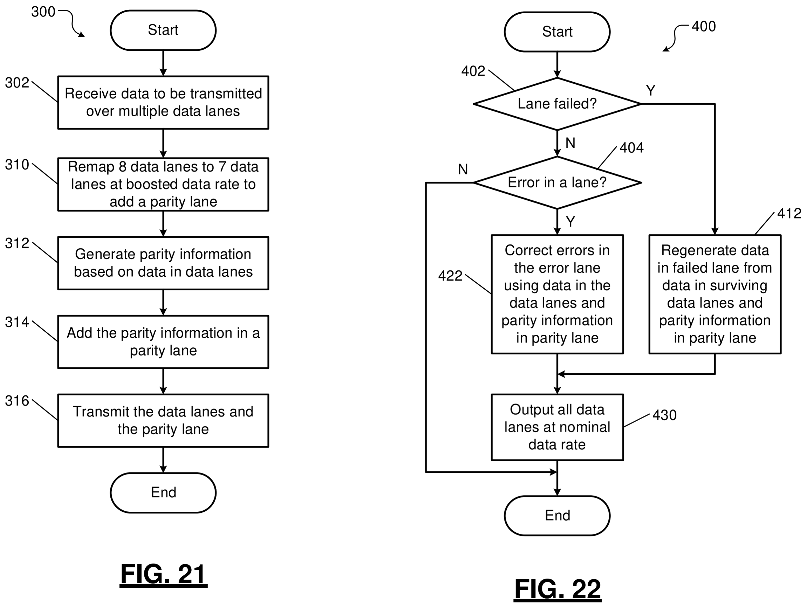

FIG. 21 shows a method 300 used by the fault-tolerant PHY device 262 of the system 111 of FIG. 18 to add parity information to a parity lane. At 302, the PHY device 262 receives data to be transmitted over multiple lanes (e.g., 8 lanes) via the communication channel 40. At 310, the PHY device 262 remaps 8 data lanes to 7 data lanes at a boosted data rate to add a parity lane. At 312, the PHY device 262 generates parity information based on the data in the remapped data lanes. At 314, the PHY device 262 adds the parity information in a parity lane. At 316, the PHY device 262 transmits the 8 data lanes and the parity lane at the boosted data rate over the communication channel 40.

FIG. 22 shows a method 400 used by the fault-tolerant PHY device 264 of the system 111 of FIG. 18 to recover a failed lane and to correct data in any lane using the parity information in a parity lane. The PHY device 264 receives data over multiple lanes through the communication channel 40. At 402, the PHY device 264 determines if any of the lanes has failed. If a lane has failed, the PHY device 104 performs steps 412 and 430 as described below. If the PHY device 264 determines if none of the lanes has failed (i.e., all lanes are operational), at 404, the PHY device 264 determines if any of the lanes has errors that need to be corrected. If none of the lanes has errors that need to be corrected, the method 400 ends, and the PHY device 264 processes the data normally without initiating the fault tolerant feature. If the PHY device 264 determines that one or more lanes have errors that need to be corrected, the PHY device 264 performs steps 422 and 430 as described below.

If the parity information is located in a separate parity lane, at 412, the PHY device 104 regenerates data in the failed lane from the data in the surviving data lanes and the parity information in the parity lane. At 430, the PHY device 104 outputs all data lanes at the nominal data rate for further processing. Before outputting the data lanes for further processing, the PHY device 104 can also correct any errors in any of the data lanes using the parity information as described in step 422 or 424 below.

If the parity information is located in a separate parity lane, at 422, the PHY device 104 corrects the errors in the data lane (having errors) based on the data in the data lanes and the parity information in the parity lane. At 430, the PHY device 104 outputs all data lanes at the nominal data rate for further processing.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims.

It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

In this application, electronic components such as transmitter, receiver, and so on may be replaced or implemented by respective circuits (e.g., transmitter circuit, receiver circuit, etc.). The terms transmitter, receiver, etc. may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit that executes code; a memory circuit that stores code executed by the processor circuit; other suitable hardware components that provide the described functionality; or a combination of some or all of the above, such as in a system-on-chip.

The functionality of any given component or circuit of the present disclosure may be distributed among multiple components or circuits that are connected via interface circuits. The interface circuits may include wired, wireless, and/or optical interfaces that are connected to a local area network (LAN), the Internet, a wide area network (WAN), or combinations thereof.
The following is a list of further preferred embodiments of the invention:
Embodiment 1. A physical layer (PHY) device for transmitting data over a communication channel, the PHY device comprising:
   a distribution circuit configured to:
      receive data from a host via a first plurality of lanes at a first data rate; and
      distribute the data into a second plurality of lanes for transmission over the communication channel; and
   a failure management circuit configured to:
      monitor the communication channel; and
      detect failure of one of the second plurality of lanes;
   wherein, subsequent to the detected failure, the distribution circuit is configured to:
      receive the data from the host through the first plurality of lanes at a second data rate that is less than the first data rate; and
      distribute the data received from the host through the first plurality of lanes at the second data rate into remaining lanes of the second plurality of lanes at the first data rate, wherein the PHY device is configured to transmit the data in the remaining lanes at the first data rate over the communication channel.
Embodiment 2. The PHY device of claim 1 wherein the distribution circuit comprises a plurality of multiplexers configured to multiplex, subsequent to the detected failure, the data received through the first plurality of lanes at the second data rate into the remaining lanes at the first data rate to map the data in the first plurality of lanes at the second data rate to the data in the remaining lanes at the first data rate.
Embodiment 3. The PHY device of claim 1 wherein the distribution circuit comprises:
   a plurality of multiplexers, wherein one of the multiplexers is configured to, subsequent to the detected failure, multiplex (i) data from a respective one of the first plurality of lanes corresponding to the remaining lanes and (ii) a portion of data from one of the first plurality of lanes corresponding to the detected failed lane in the second plurality of lanes; and
   a plurality of encoder and padding circuits, wherein one of the encoder and padding circuits is configured to:
      encode an output of a corresponding multiplexer to generate encoded data;
      arrange an encoded portion corresponding to the portion of data from one of the first plurality of lanes at a predetermined location in the encoded data; and
      append the encoded data with padding;
   wherein the padding indicates the detected failure to a second PHY device receiving the transmitted data in the remaining lanes over the communication channel; and
   wherein the encoded portion arranged at the predetermined location allows the second PHY device to align the data from the remaining lanes.
Embodiment 4. The PHY device of claim 1 wherein the distribution circuit is configured to further increase a data rate of the remaining lanes to greater than the first data rate before transmitting the data in the remaining lanes over the communication channel.
Embodiment 5. A physical layer (PHY) device for receiving data over a communication channel, the PHY device comprising:
   an alignment circuit configured to:
   receive data transmitted through a plurality of lanes over the communication channel;
   determine that the plurality of lanes include data from a failed lane by detecting padding in each of the plurality of lanes;
   detect, in each of the plurality of lanes, locations of the data added from the failed lane;
   separate, based on the detected locations, the data added from the failed lane from remaining data corresponding to the plurality of lanes;
   reconstruct the failed lane from the separated data; and
   output the plurality of lanes and the reconstructed lane with respective data; and a decoder configured to decode the respective data in the plurality of lanes and the reconstructed lane.
Embodiment 6. The PHY device of claim 5 wherein the alignment circuit comprises:
   a plurality of alignment and split circuits configured to:
      receive the plurality of lanes;
      align the plurality of lanes using the locations of the data added from the failed lane in the plurality of lanes; and
      split the aligned data from the plurality of lanes into (i) a first portion including the data from the failed lane and (ii) a second portion including remaining data;
   a deskew circuit configured to remove skew between the data in the first portion; and
   a reassembly circuit configured to:
      reassemble the deskewed data from the first portion to reconstruct the failed lane; and
      reassemble the remaining data from the second portion into respective ones of the plurality of lanes.
Embodiment 7. A method of recovering a lane that fails during transmission of data via multiple lanes over a communication channel, the method comprising:
   receiving data from a host via a first plurality of lanes at a first data rate;
   distributing the data into a second plurality of lanes for transmission over the communication channel;
   monitoring the communication channel;
   detecting failure of one of the second plurality of lanes;
   configuring the host, subsequent to the detected failure, to send the data through the first plurality of lanes at a second data rate that is less than the first data rate;
   distributing the data received from the host through the first plurality of lanes at the second data rate into remaining lanes of the second plurality of lanes at the first data rate; and
   transmitting the data in the remaining lanes at the first data rate over the communication channel.
Embodiment 8. The method of claim 7 wherein the distributing the data comprises multiplexing, subsequent to the detected failure, the data received through the first plurality of lanes at the second data rate into the remaining lanes at the first data rate to map the data in the first plurality of lanes at the second data rate to the data in the remaining lanes at the first data rate.
Embodiment 9. The method of claim 7 wherein the distributing the data comprises:
   multiplexing, subsequent to the detected failure, (i) data from a respective one of the first plurality of lanes corresponding to the remaining lanes and (ii) a portion of data from one of the first plurality of lanes corresponding to the detected failed lane in the second plurality of lanes;
   encoding the multiplexed data;
   arranging an encoded portion corresponding to the portion of data from one of the first plurality of lanes at a predetermined location in the encoded multiplexed data; and
   appending the encoded multiplexed data with padding;
   wherein the padding indicates the detected failure to a receiving device receiving the transmitted data in the remaining lanes over the communication channel; and
   wherein the encoded portion arranged at the predetermined location allows the receiving device to align the data from the remaining lanes.
Embodiment 10. The method of claim 7 further comprising increasing a data rate of the remaining lanes to greater than the first data rate before transmitting the data in the remaining lanes over the communication channel.
Embodiment 11. The method of claim 7 further comprising:
   receiving the data transmitted through the remaining lanes over the communication channel;
   detecting padding in each of the remaining lanes;
   determining based on the detected padding that the remaining lanes include data from a failed lane;
   detecting, in each of the remaining lanes, locations of the data added from the failed lane;
   separating, based on the detected locations, the data added from the failed lane from remaining data corresponding to the remaining lanes;
   reconstructing the failed lane from the separated data;
   outputting the remaining lanes and the reconstructed lane with respective data; and decoding the respective data in the remaining lanes and the reconstructed lane.
Embodiment 12. The method of claim 11 further comprising:
   aligning the remaining lanes using the locations of the data added from the failed lane in the remaining lanes; and
   splitting the aligned data from the remaining lanes into (i) a first portion including the data from the failed lane and (ii) a second portion including remaining data;
   removing skew between the data in the first portion;
   reassembling the deskewed data from the first portion to reconstruct the failed lane; and reassembling the remaining data from the second portion into respective ones of the remaining lanes.
Embodiment 13. A physical layer (PHY) device for transmitting data over a communication channel, the PHY device comprising:
   a distribution circuit configured to:
      receive data from a host via a first plurality of lanes at a first data rate; and
      distribute the data into a second plurality of lanes for transmission over the communication channel;
   a failure management circuit configured to:
      monitor the communication channel; and
      detect failure of one of the second plurality of lanes; and
   a rate adapter circuit configured to, subsequent to the detected failure, adapt the first data rate of the data received from the host to a second data rate that is less than the first data rate;
   wherein the distribution circuit is configured to distribute, subsequent to the detected failure, the data received from the rate adapter circuit into remaining lanes of the second plurality of lanes at the second data rate; and
   wherein the PHY device is configured to transmit the data in the remaining lanes at the second data rate over the communication channel.
Embodiment 14. The PHY device of claim 13 wherein the distribution circuit comprises a plurality of multiplexers configured to multiplex, subsequent to the detected failure, the data received from the rate adapter circuit into the remaining lanes to map the data received in the first plurality of lanes at the first data rate to the data in the remaining lanes at the second data rate.
Embodiment 15. The PHY device of claim 13 wherein the distribution circuit comprises:
   a plurality of multiplexers, wherein each multiplexer is configured to, subsequent to the detected failure, multiplex (i) data output by the rate adapter circuit from one of the first plurality of lanes corresponding to the remaining lanes and (ii) a portion of data output by the rate adapter circuit from one of the first plurality of lanes corresponding to a failed one of the second plurality of lanes; and
   a plurality of encoder and padding circuits, wherein each encoder and padding circuit is configured to:
      encode an output of a corresponding multiplexer to generate encoded data;
      arrange an encoded portion corresponding to the portion of data corresponding to the failed lane at a predetermined location in the encoded data; and
      append the encoded data with padding;
   wherein the padding indicates the detected failure to a second PHY device receiving the transmitted data in the remaining lanes over the communication channel; and
   wherein the encoded portion arranged at the predetermined location allows the second PHY device to align the data from the remaining lanes.
Embodiment 16. The PHY device of claim 13 wherein the distribution circuit comprises:
   a round-robin distributor configured to distribute the data received from the rate adapter circuit in a round-robin manner; and
   a plurality of encoders configured to encode the data distributed by the round-robin distributor and to output the encoded data via the remaining lanes.
Embodiment 17. The PHY device of claim 13 further comprising a parity adder circuit configured to: generate parity information based on the data received from the rate adapter circuit; and add a parity lane including the parity information.
Embodiment 18. The PHY device of claim 17 wherein the parity lane is one of the second plurality of lanes and wherein the distribution circuit is configured to increase a data rate of the remaining lanes to greater than the second data rate to include the parity lane in the second plurality of lanes.
Embodiment 19. The PHY device of claim 17 wherein the parity lane is in addition to the second plurality of lanes and wherein the distribution circuit is configured to decrease a data rate of the remaining lanes to less than the second data rate to add the parity lane to the second plurality of lanes.
Embodiment 20. A method of transmitting data via multiple lanes over a communication channel when a lane fails during transmission over the communication channel, the method comprising:
   receiving data from a host via a first plurality of lanes at a first data rate;
   distributing the data into a second plurality of lanes for transmission over the communication channel;
   monitoring the communication channel;
   detecting failure of one of the second plurality of lanes;
   adapting, subsequent to the detected failure, the first data rate of the data received from the host to a second data rate that is less than the first data rate;
   distributing, subsequent to the detected failure, the data into remaining lanes of the second plurality of lanes at the second data rate; and
   transmitting the data in the remaining lanes at the second data rate over the communication channel.
Embodiment 21. The method of claim 20 wherein the distributing the data into the remaining lanes comprises multiplexing, subsequent to the detected failure, the data at the second data rate into the remaining lanes to map the data received in the first plurality of lanes at the first data rate to the data in the remaining lanes at the second data rate.
Embodiment 22. The method of claim 20 wherein the distributing the data into the remaining lanes comprises:
   multiplexing, subsequent to the detected failure, (i) data output at the second data rate from one of the first plurality of lanes corresponding to the remaining lanes and (ii) a portion of data output at the second data rate from one of the first plurality of lanes corresponding to a failed one of the second plurality of lanes;
   encoding the multiplexed data to generate encoded data;
   arranging an encoded portion corresponding to the portion of data corresponding to the failed lane at a predetermined location in the encoded data; and
   appending the encoded data with padding;
   wherein the padding indicates the detected failure to a receiving device receiving the transmitted data in the remaining lanes over the communication channel; and
   wherein the encoded portion arranged at the predetermined location allows the receiving device to align the data from the remaining lanes.
Embodiment 23. The method of claim 20 wherein the distributing the data into the remaining lanes comprises:
   distributing the data at the second data rate in a round-robin manner; and
   encoding the data distributed in the round-robin manner to output the encoded data via the remaining lanes.
Embodiment 24. The method of claim 20 further comprising:
   generating parity information based on the data distributed at the second data rate; and adding a parity lane including the parity information.
Embodiment 25. The method of claim 24 wherein the parity lane is one of the second plurality of lanes and the method further comprises increasing a data rate of the remaining lanes to greater than the second data rate to include the parity lane in the second plurality of lanes.
Embodiment 26. The method of claim 24 wherein the parity lane is in addition to the second plurality of lanes and the method further comprises decreasing a data rate of the remaining lanes to less than the second data rate to add the parity lane to the second plurality of lanes.
Embodiment 27. A physical layer (PHY) device for receiving data over a communication channel, the PHY device comprising:
   an alignment circuit configured to:
      receive data transmitted at a first data rate through a plurality of lanes over the communication channel;
      determine that the plurality of lanes include data from a failed lane by detecting padding in each of the plurality of lanes;
      detect, in each of the plurality of lanes, locations of the data added from the failed lane;
      separate, based on the detected locations, the data added from the failed lane from remaining data corresponding to the plurality of lanes;
      reconstruct the failed lane from the separated data; and
      output the plurality of lanes and the reconstructed lane with respective data at a second data rate that is greater than the first data rate; and
   a decoder configured to decode the respective data in the plurality of lanes and the reconstructed lane.
Embodiment 28. The PHY device of claim 27 wherein the alignment circuit comprises:
   a plurality of alignment and split circuits configured to:
      receive the plurality of lanes;
      align the plurality of lanes using the locations of the data added from the failed lane in the plurality of lanes; and
      split the aligned data from the plurality of lanes into (i) a first portion including the data from the failed lane and (ii) a second portion including remaining data;
   a deskew circuit configured to remove skew between the data in the first portion; and
   a reassembly circuit configured to:
      reassemble the deskewed data from the first portion to reconstruct the failed lane; and
      reassemble the remaining data from the second portion into respective ones of the plurality of lanes.
Embodiment 29. The PHY device of claim 27 further comprising a repair circuit configured to, in response to one of the plurality of lanes being a parity lane comprising parity information, in response to receiving the plurality of lanes and a parity lane comprising parity information through the communication channel:
   detect whether one of the plurality of lanes has errors; and
   correct the errors in the one of the plurality of lanes based on the data in the plurality of lanes and the parity information in the parity lane.
Embodiment 30. A method of recovering a lane that fails during transmission of data via multiple lanes over a communication channel, the method comprising:
   receiving data transmitted at a first data rate through a plurality of lanes over the communication channel;
   determining that the plurality of lanes include data from a failed lane by detecting padding in each of the plurality of lanes;
   detecting, in each of the plurality of lanes, locations of the data added from the failed lane;
   separating, based on the detected locations, the data added from the failed lane from remaining data corresponding to the plurality of lanes;
   reconstructing the failed lane from the separated data;
   outputting the plurality of lanes and the reconstructed lane with respective data at a second data rate that is greater than the first data rate; and
   decoding the respective data in the plurality of lanes and the reconstructed lane.
Embodiment 31. The method of claim 30 further comprising:
   aligning the received plurality of lanes using the locations of the data added from the failed lane in the plurality of lanes;
   splitting the aligned data from the plurality of lanes into (i) a first portion including the data from the failed lane and (ii) a second portion including remaining data;
   removing skew between the data in the first portion;
   reassembling the deskewed data from the first portion to reconstruct the failed lane; and
   reassembling the remaining data from the second portion into respective ones of the plurality of lanes.
Embodiment 32. The method of claim 30 further comprising, in response to one of the plurality of lanes being a parity lane comprising parity information, or in response to receiving the plurality of lanes and a parity lane comprising parity information through the communication channel:
   detecting whether one of the plurality of lanes has errors; and
   correcting the errors in the one of the plurality of lanes based on the data in the plurality of lanes and the parity information in the parity lane.
Embodiment 33. A physical layer (PHY) device for receiving data over a communication channel, the PHY device comprising:
   a plurality of decoders configured to decode data received in a plurality of lanes through the communication channel and to output the decoded data over respective lanes;
   an aligned circuit configured to align the decoded data received from the decoders across the respective lanes; and
   a re-assembler circuit configured to reassemble the aligned data received from the aligner circuit and to output the reassembled data via the respective lanes.
Embodiment 34. The PHY device of claim 33 wherein:
   the plurality of decoders is configured to receive the data in the plurality of lanes at a first data rate; and
   the re-assembler circuit is configured to output the reassembled data via the respective lanes at a second data rate that is greater than the first data rate.
Embodiment 35. The PHY device of claim 33 wherein in response to the plurality of lanes including a parity lane comprising parity information or in response to receiving the plurality of lanes and a parity lane comprising parity information through the communication channel:
   the plurality of decoders is configured to receive the data in the plurality of lanes at a first data rate; and
   the re-assembler circuit is configured to output the reassembled data via the respective lanes at a second data rate that is less than the first data rate.
Embodiment 36. The PHY device of claim 33 further comprising a repair circuit configured to, (i) in response to the plurality of lanes including data from a failed lane and the plurality of lanes including a parity lane including parity information or (ii) in response to the plurality of lanes including data from a failed lane and in response to receiving the plurality of lanes and a parity lane comprising parity information through the communication channel:
   regenerate the failed lane using the data in the plurality lanes and the parity information in the parity lane; and
   output the plurality of lanes including the regenerated lane to the plurality of decoders.
Embodiment 37. The PHY device of claim 33 further comprising a repair circuit configured to, in response to one of the plurality of lanes being a parity lane comprising parity information, or in response to receiving the plurality of lanes and a parity lane comprising parity information through the communication channel:
   detect whether one of the plurality of lanes has errors;
   correct the errors in the one of the plurality of lanes based on the data in the plurality of lanes and the parity information in the parity lane; and
   output the plurality of lanes to the plurality of decoders.
Embodiment 38. A method of recovering a lane that fails during transmission of data via multiple lanes over a communication channel, the method comprising:
   decoding data received in a plurality of lanes through the communication channel and to output the decoded data over respective lanes;
   aligning the decoded data across the respective lanes; and
   reassembling the aligned data to output the reassembled data via the respective lanes.
Embodiment 39. The method of claim 38 further comprising:
   receiving the data in the plurality of lanes at a first data rate; and
   outputting the reassembled data via the respective lanes at a second data rate that is greater than the first data rate.
Embodiment 40. The method of claim 38 further comprising, in response to the plurality of lanes including a parity lane comprising parity information or in response to receiving the plurality of lanes and a parity lane comprising parity information through the communication channel:
   receiving the data in the plurality of lanes at a first data rate; and
   outputting the reassembled data via the respective lanes at a second data rate that is less than the first data rate.
Embodiment 41. The method of claim 38 further comprising, (i) in response to the plurality of lanes including data from a failed lane and the plurality of lanes including a parity lane including parity information or (ii) in response to the plurality of lanes including data from a failed lane and in response to receiving the plurality of lanes and a parity lane comprising parity information through the communication channel:
   regenerating the failed lane using the data in the plurality lanes and the parity information in the parity lane; and
   outputting the plurality of lanes including the regenerated lane to for the decoding.
Embodiment 42. The method of claim 38 further comprising, in response to one of the plurality of lanes being a parity lane comprising parity information, or in response to receiving the plurality of lanes and a parity lane comprising parity information through the communication channel:
   detecting whether one of the plurality of lanes has errors;
   correcting the errors in the one of the plurality of lanes based on the data in the plurality of lanes and the parity information in the parity lane; and
   outputting the plurality of lanes to for the decoding.

## Claims

1. A physical layer (PHY) device for transmitting data over a communication channel, the PHY device comprising:
a distribution circuit configured to:
receive data from a host via a first plurality of lanes at a first data rate; and
distribute the data into a second plurality of lanes for transmission over the communication channel; and
a failure management circuit configured to:
monitor the communication channel; and
detect failure of one of the second plurality of lanes;
wherein, subsequent to the detected failure, the distribution circuit is configured to:
receive the data from the host through the first plurality of lanes at a second data rate that is less than the first data rate; and
distribute the data received from the host through the first plurality of lanes at the second data rate into remaining lanes of the second plurality of lanes at the first data rate, wherein the PHY device is configured to transmit the data in the remaining lanes at the first data rate over the communication channel.

2. The PHY device of claim 1 wherein the distribution circuit comprises a plurality of multiplexers configured to multiplex, subsequent to the detected failure, the data received through the first plurality of lanes at the second data rate into the remaining lanes at the first data rate to map the data in the first plurality of lanes at the second data rate to the data in the remaining lanes at the first data rate.

3. The PHY device of claim 1 wherein the distribution circuit comprises:
a plurality of multiplexers, wherein one of the multiplexers is configured to, subsequent to the detected failure, multiplex (i) data from a respective one of the first plurality of lanes corresponding to the remaining lanes and (ii) a portion of data from one of the first plurality of lanes corresponding to the detected failed lane in the second plurality of lanes; and
a plurality of encoder and padding circuits, wherein one of the encoder and padding circuits is configured to:
encode an output of a corresponding multiplexer to generate encoded data;
arrange an encoded portion corresponding to the portion of data from one of the first plurality of lanes at a predetermined location in the encoded data; and
append the encoded data with padding;
wherein the padding indicates the detected failure to a second PHY device receiving the transmitted data in the remaining lanes over the communication channel; and
wherein the encoded portion arranged at the predetermined location allows the second PHY device to align the data from the remaining lanes.

4. The PHY device of claim 1 wherein the distribution circuit is configured to further increase a data rate of the remaining lanes to greater than the first data rate before transmitting the data in the remaining lanes over the communication channel.

5. A physical layer (PHY) device for receiving data over a communication channel, the PHY device comprising:
an alignment circuit configured to:
receive data transmitted through a plurality of lanes over the communication channel;
determine that the plurality of lanes include data from a failed lane by detecting padding in each of the plurality of lanes;
detect, in each of the plurality of lanes, locations of the data added from the failed lane;
separate, based on the detected locations, the data added from the failed lane from remaining data corresponding to the plurality of lanes;
reconstruct the failed lane from the separated data; and
output the plurality of lanes and the reconstructed lane with respective data; and a decoder configured to decode the respective data in the plurality of lanes and the reconstructed lane.

6. The PHY device of claim 5 wherein the alignment circuit comprises:
a plurality of alignment and split circuits configured to:
receive the plurality of lanes;
align the plurality of lanes using the locations of the data added from the failed lane in the plurality of lanes; and
split the aligned data from the plurality of lanes into (i) a first portion including the data from the failed lane and (ii) a second portion including remaining data;
a deskew circuit configured to remove skew between the data in the first portion; and
a reassembly circuit configured to:
reassemble the deskewed data from the first portion to reconstruct the failed lane; and
reassemble the remaining data from the second portion into respective ones of the plurality of lanes.

7. A method of recovering a lane that fails during transmission of data via multiple lanes over a communication channel, the method comprising:
receiving data from a host via a first plurality of lanes at a first data rate;
distributing the data into a second plurality of lanes for transmission over the communication channel;
monitoring the communication channel;
detecting failure of one of the second plurality of lanes;
configuring the host, subsequent to the detected failure, to send the data through the first plurality of lanes at a second data rate that is less than the first data rate;
distributing the data received from the host through the first plurality of lanes at the second data rate into remaining lanes of the second plurality of lanes at the first data rate; and
transmitting the data in the remaining lanes at the first data rate over the communication channel.

8. The method of claim 7 wherein the distributing the data comprises multiplexing, subsequent to the detected failure, the data received through the first plurality of lanes at the second data rate into the remaining lanes at the first data rate to map the data in the first plurality of lanes at the second data rate to the data in the remaining lanes at the first data rate.

9. The method of claim 7 wherein the distributing the data comprises:
multiplexing, subsequent to the detected failure, (i) data from a respective one of the first plurality of lanes corresponding to the remaining lanes and (ii) a portion of data from one of the first plurality of lanes corresponding to the detected failed lane in the second plurality of lanes;
encoding the multiplexed data;
arranging an encoded portion corresponding to the portion of data from one of the first plurality of lanes at a predetermined location in the encoded multiplexed data; and
appending the encoded multiplexed data with padding;
wherein the padding indicates the detected failure to a receiving device receiving the transmitted data in the remaining lanes over the communication channel; and
wherein the encoded portion arranged at the predetermined location allows the receiving device to align the data from the remaining lanes.

10. The method of claim 7 further comprising increasing a data rate of the remaining lanes to greater than the first data rate before transmitting the data in the remaining lanes over the communication channel.

11. The method of claim 7 further comprising:
receiving the data transmitted through the remaining lanes over the communication channel;
detecting padding in each of the remaining lanes;
determining based on the detected padding that the remaining lanes include data from a failed lane;
detecting, in each of the remaining lanes, locations of the data added from the failed lane;
separating, based on the detected locations, the data added from the failed lane from remaining data corresponding to the remaining lanes;
reconstructing the failed lane from the separated data;
outputting the remaining lanes and the reconstructed lane with respective data; and
decoding the respective data in the remaining lanes and the reconstructed lane.

12. The method of claim 11 further comprising:
aligning the remaining lanes using the locations of the data added from the failed lane in the remaining lanes; and
splitting the aligned data from the remaining lanes into (i) a first portion including the data from the failed lane and (ii) a second portion including remaining data;
removing skew between the data in the first portion;
reassembling the deskewed data from the first portion to reconstruct the failed lane; and reassembling the remaining data from the second portion into respective ones of the remaining lanes.

13. A physical layer (PHY) device for transmitting data over a communication channel, the PHY device comprising:
a distribution circuit configured to:
receive data from a host via a first plurality of lanes at a first data rate; and
distribute the data into a second plurality of lanes for transmission over the communication channel;
a failure management circuit configured to:
monitor the communication channel; and
detect failure of one of the second plurality of lanes; and
a rate adapter circuit configured to, subsequent to the detected failure, adapt the first data rate of the data received from the host to a second data rate that is less than the first data rate;
wherein the distribution circuit is configured to distribute, subsequent to the detected failure, the data received from the rate adapter circuit into remaining lanes of the second plurality of lanes at the second data rate; and
wherein the PHY device is configured to transmit the data in the remaining lanes at the second data rate over the communication channel.

14. The PHY device of claim 13 wherein the distribution circuit comprises a plurality of multiplexers configured to multiplex, subsequent to the detected failure, the data received from the rate adapter circuit into the remaining lanes to map the data received in the first plurality of lanes at the first data rate to the data in the remaining lanes at the second data rate.

15. The PHY device of claim 13 wherein the distribution circuit comprises:
a plurality of multiplexers, wherein each multiplexer is configured to, subsequent to the detected failure, multiplex (i) data output by the rate adapter circuit from one of the first plurality of lanes corresponding to the remaining lanes and (ii) a portion of data output by the rate adapter circuit from one of the first plurality of lanes corresponding to a failed one of the second plurality of lanes; and
a plurality of encoder and padding circuits, wherein each encoder and padding circuit is configured to:
encode an output of a corresponding multiplexer to generate encoded data;
arrange an encoded portion corresponding to the portion of data corresponding to the failed lane at a predetermined location in the encoded data; and
append the encoded data with padding;
wherein the padding indicates the detected failure to a second PHY device receiving the transmitted data in the remaining lanes over the communication channel; and
wherein the encoded portion arranged at the predetermined location allows the second PHY device to align the data from the remaining lanes.

16. The PHY device of claim 13 wherein the distribution circuit comprises:
a round-robin distributor configured to distribute the data received from the rate adapter circuit in a round-robin manner; and
a plurality of encoders configured to encode the data distributed by the round-robin distributor and to output the encoded data via the remaining lanes.

17. The PHY device of claim 13 further comprising a parity adder circuit configured to: generate parity information based on the data received from the rate adapter circuit; and add a parity lane including the parity information.

18. The PHY device of claim 17 wherein the parity lane is one of the second plurality of lanes and wherein the distribution circuit is configured to increase a data rate of the remaining lanes to greater than the second data rate to include the parity lane in the second plurality of lanes.

19. The PHY device of claim 17 wherein the parity lane is in addition to the second plurality of lanes and wherein the distribution circuit is configured to decrease a data rate of the remaining lanes to less than the second data rate to add the parity lane to the second plurality of lanes.

20. A method of transmitting data via multiple lanes over a communication channel when a lane fails during transmission over the communication channel, the method comprising:
receiving data from a host via a first plurality of lanes at a first data rate;
distributing the data into a second plurality of lanes for transmission over the communication channel;
monitoring the communication channel;
detecting failure of one of the second plurality of lanes;
adapting, subsequent to the detected failure, the first data rate of the data received from the host to a second data rate that is less than the first data rate;
distributing, subsequent to the detected failure, the data into remaining lanes of the second plurality of lanes at the second data rate; and
transmitting the data in the remaining lanes at the second data rate over the communication channel.

21. The method of claim 20 wherein the distributing the data into the remaining lanes comprises multiplexing, subsequent to the detected failure, the data at the second data rate into the remaining lanes to map the data received in the first plurality of lanes at the first data rate to the data in the remaining lanes at the second data rate.

22. The method of claim 20 wherein the distributing the data into the remaining lanes comprises:
multiplexing, subsequent to the detected failure, (i) data output at the second data rate from one of the first plurality of lanes corresponding to the remaining lanes and (ii) a portion of data output at the second data rate from one of the first plurality of lanes corresponding to a failed one of the second plurality of lanes;
encoding the multiplexed data to generate encoded data;
arranging an encoded portion corresponding to the portion of data corresponding to the failed lane at a predetermined location in the encoded data; and
appending the encoded data with padding;
wherein the padding indicates the detected failure to a receiving device receiving the transmitted data in the remaining lanes over the communication channel; and
wherein the encoded portion arranged at the predetermined location allows the receiving device to align the data from the remaining lanes.

23. The method of claim 20 wherein the distributing the data into the remaining lanes comprises:
distributing the data at the second data rate in a round-robin manner; and
encoding the data distributed in the round-robin manner to output the encoded data via the remaining lanes.

24. The method of claim 20 further comprising:
generating parity information based on the data distributed at the second data rate; and
adding a parity lane including the parity information.

25. The method of claim 24 wherein the parity lane is one of the second plurality of lanes and the method further comprises increasing a data rate of the remaining lanes to greater than the second data rate to include the parity lane in the second plurality of lanes.

26. The method of claim 24 wherein the parity lane is in addition to the second plurality of lanes and the method further comprises decreasing a data rate of the remaining lanes to less than the second data rate to add the parity lane to the second plurality of lanes.

27. A physical layer (PHY) device for receiving data over a communication channel, the PHY device comprising:
an alignment circuit configured to:
receive data transmitted at a first data rate through a plurality of lanes over the communication channel;
determine that the plurality of lanes include data from a failed lane by detecting padding in each of the plurality of lanes;
detect, in each of the plurality of lanes, locations of the data added from the failed lane;
separate, based on the detected locations, the data added from the failed lane from remaining data corresponding to the plurality of lanes;
reconstruct the failed lane from the separated data; and
output the plurality of lanes and the reconstructed lane with respective data at a second data rate that is greater than the first data rate; and
a decoder configured to decode the respective data in the plurality of lanes and the reconstructed lane.

28. The PHY device of claim 27 wherein the alignment circuit comprises:
a plurality of alignment and split circuits configured to:
receive the plurality of lanes;
align the plurality of lanes using the locations of the data added from the failed lane in the plurality of lanes; and
split the aligned data from the plurality of lanes into (i) a first portion including the data from the failed lane and (ii) a second portion including remaining data;
a deskew circuit configured to remove skew between the data in the first portion; and
a reassembly circuit configured to:
reassemble the deskewed data from the first portion to reconstruct the failed lane; and
reassemble the remaining data from the second portion into respective ones of the plurality of lanes.

29. The PHY device of claim 27 further comprising a repair circuit configured to, in response to one of the plurality of lanes being a parity lane comprising parity information, in response to receiving the plurality of lanes and a parity lane comprising parity information through the communication channel:
detect whether one of the plurality of lanes has errors; and
correct the errors in the one of the plurality of lanes based on the data in the plurality of lanes and the parity information in the parity lane.

30. A method of recovering a lane that fails during transmission of data via multiple lanes over a communication channel, the method comprising:
receiving data transmitted at a first data rate through a plurality of lanes over the communication channel;
determining that the plurality of lanes include data from a failed lane by detecting padding in each of the plurality of lanes;
detecting, in each of the plurality of lanes, locations of the data added from the failed lane;
separating, based on the detected locations, the data added from the failed lane from remaining data corresponding to the plurality of lanes;
reconstructing the failed lane from the separated data;
outputting the plurality of lanes and the reconstructed lane with respective data at a second data rate that is greater than the first data rate; and
decoding the respective data in the plurality of lanes and the reconstructed lane.

31. The method of claim 30 further comprising:
aligning the received plurality of lanes using the locations of the data added from the failed lane in the plurality of lanes;
splitting the aligned data from the plurality of lanes into (i) a first portion including the data from the failed lane and (ii) a second portion including remaining data;
removing skew between the data in the first portion;
reassembling the deskewed data from the first portion to reconstruct the failed lane; and
reassembling the remaining data from the second portion into respective ones of the plurality of lanes.

32. The method of claim 30 further comprising, in response to one of the plurality of lanes being a parity lane comprising parity information, or in response to receiving the plurality of lanes and a parity lane comprising parity information through the communication channel:
detecting whether one of the plurality of lanes has errors; and
correcting the errors in the one of the plurality of lanes based on the data in the plurality of lanes and the parity information in the parity lane.

33. A physical layer (PHY) device for receiving data over a communication channel, the PHY device comprising:
a plurality of decoders configured to decode data received in a plurality of lanes through the communication channel and to output the decoded data over respective lanes;
an aligned circuit configured to align the decoded data received from the decoders across the respective lanes; and
a re-assembler circuit configured to reassemble the aligned data received from the aligner circuit and to output the reassembled data via the respective lanes.

34. The PHY device of claim 33 wherein:
the plurality of decoders is configured to receive the data in the plurality of lanes at a first data rate; and
the re-assembler circuit is configured to output the reassembled data via the respective lanes at a second data rate that is greater than the first data rate.

35. The PHY device of claim 33 wherein in response to the plurality of lanes including a parity lane comprising parity information or in response to receiving the plurality of lanes and a parity lane comprising parity information through the communication channel:
the plurality of decoders is configured to receive the data in the plurality of lanes at a first data rate; and
the re-assembler circuit is configured to output the reassembled data via the respective lanes at a second data rate that is less than the first data rate.

36. The PHY device of claim 33 further comprising a repair circuit configured to, (i) in response to the plurality of lanes including data from a failed lane and the plurality of lanes including a parity lane including parity information or (ii) in response to the plurality of lanes including data from a failed lane and in response to receiving the plurality of lanes and a parity lane comprising parity information through the communication channel:
regenerate the failed lane using the data in the plurality lanes and the parity information in the parity lane; and
output the plurality of lanes including the regenerated lane to the plurality of decoders.

37. The PHY device of claim 33 further comprising a repair circuit configured to, in response to one of the plurality of lanes being a parity lane comprising parity information, or in response to receiving the plurality of lanes and a parity lane comprising parity information through the communication channel:
detect whether one of the plurality of lanes has errors;
correct the errors in the one of the plurality of lanes based on the data in the plurality of lanes and the parity information in the parity lane; and
output the plurality of lanes to the plurality of decoders.

38. A method of recovering a lane that fails during transmission of data via multiple lanes over a communication channel, the method comprising:
decoding data received in a plurality of lanes through the communication channel and to output the decoded data over respective lanes;
aligning the decoded data across the respective lanes; and
reassembling the aligned data to output the reassembled data via the respective lanes.

39. The method of claim 38 further comprising:
receiving the data in the plurality of lanes at a first data rate; and
outputting the reassembled data via the respective lanes at a second data rate that is greater than the first data rate.

40. The method of claim 38 further comprising, in response to the plurality of lanes including a parity lane comprising parity information or in response to receiving the plurality of lanes and a parity lane comprising parity information through the communication channel:
receiving the data in the plurality of lanes at a first data rate; and
outputting the reassembled data via the respective lanes at a second data rate that is less than the first data rate.

41. The method of claim 38 further comprising, (i) in response to the plurality of lanes including data from a failed lane and the plurality of lanes including a parity lane including parity information or (ii) in response to the plurality of lanes including data from a failed lane and in response to receiving the plurality of lanes and a parity lane comprising parity information through the communication channel:
regenerating the failed lane using the data in the plurality lanes and the parity information in the parity lane; and
outputting the plurality of lanes including the regenerated lane to for the decoding.

42. The method of claim 38 further comprising, in response to one of the plurality of lanes being a parity lane comprising parity information, or in response to receiving the plurality of lanes and a parity lane comprising parity information through the communication channel:
detecting whether one of the plurality of lanes has errors;
correcting the errors in the one of the plurality of lanes based on the data in the plurality of lanes and the parity information in the parity lane; and
outputting the plurality of lanes to for the decoding.
